# EUROPEAN PATENT APPLICATION

(11) **EP 4 664 947 A1**
(43) Date of publication of application: **17.12.2025**
(21) Application number: 24752837.5
(22) Date of filing: 05.02.2024
(51) Int. Cl.: H04W 8/08

(54) **COMMUNICATION METHOD FOR ARTIFICIAL INTELLIGENCE ASSISTANCE, AND RELATED DEVICE**

(30) Priority: 09.02.2023 CN 202310132446
(71) Applicant: Sony Group Corporation, Tokyo 108-0075 (JP)
(72) Inventor: SUN, Chen, Beijing 100027 (CN); FAN, Tingting, Beijing 100027 (CN)
(74) Representative: D Young & Co LLP
(86) International application number: PCT/CN2024/075879
(87) International publication number: WO 2024/164982

(57) **Abstract**

Disclosed are communication methods for artificial intelligence assistance, and related devices. An exemplary communication method comprises: receiving a data stream including at least a first data block and a second data block; sending the first data block to a user equipment (UE); based on the first data block, using a prediction model to generate a second predicted data block; based on a difference between the second data block and the second predicted data block, generating a second differential data block; and sending the second differential data block to the UE.

## Description

### CLAIM OF PRIORITY

This application claims the priority to Chinese patent application with application number 202310132446.9, titled "COMMUNICATION METHOD FOR ARTIFICIAL INTELLIGENCE ASSISTANCE, AND RELATED DEVICE", filed on February 9, 2023, the entire content of which is incorporated herein by reference.

### TECHNICAL FIELD

The present disclosure relates to a field of communication, and in particular, to a communication method for artificial intelligence (Al) assistance and a related device.

### BACKGROUND

With the development of wireless communication technology, application scenarios supported by wireless communication systems are becoming increasingly rich. For example, many users or applications may involve Computer Graphics (CG) services or Extended Reality (XR) services. Those services usually require transmission of a large amount of data, such as various types of data streams. It is very challenging to support complex CG or XR services in wireless communication systems. To this end, wireless communication systems need to be enhanced in many ways. Moreover, the performance of the enhanced wireless communication systems needs to be further evaluated and improved.

### SUMMARY

The present disclosure provides communication methods for artificial intelligence assistance, and related devices. By using prediction models based on artificial intelligence technology, the amount of data transmitted may be reduced while maintaining acceptable communication quality. When using the prediction models, different types of data may be selectively transmitted based on prediction performance. In addition, improved methods may be used to train the prediction model, thereby enhancing the efficiency and accuracy of the training. In some scenarios, data transmission and model training that overlap may be adopted. Furthermore, other aspects are also disclosed.

One aspect of the present disclosure relates to an electronic device used with a base station, the electronic device comprising a processing circuit configured to: receive a data stream including at least a first data block and a second data block; send the first data block to a user equipment (UE); generate a second predicted data block using a prediction model based on the first data block; generate a second differential data block based on a difference between the second data block and the second predicted data block; and send the second differential data block to the UE.

One aspect of the present disclosure relates to an electronic device used with a UE, wherein the electronic device comprises a processing circuit configured to: receive a first data block in a data stream from a base station; generate a second predicted data block using a prediction model based on the first data block; receive a second differential data block from the base station; and recover a second data block in the data stream based on a sum of the second predicted data block and the second differential data block.

One aspect of the present disclosure relates to a communication method, comprising: receiving a data stream including at least a first data block and a second data block; sending the first data block to a UE; generating a second predicted data block using a prediction model based on the first data block; generating a second differential data block based on a difference between the second data block and the second predicted data block; and sending the second differential data block to the UE.

One aspect of the present disclosure relates to a communication method, comprising: receiving a first data block in a data stream from a base station; generating a second predicted data block using a prediction model based on the first data block; receiving a second differential data block from the base station; and recovering a second data block in the data stream based on a sum of the second predicted data block and the second differential data block.

Another aspect of the present disclosure relates to a computer-readable storage medium having one or more instructions stored thereon, which, when executed by one or more processing circuits of an electronic device, cause the electronic device to perform any method as described in the present disclosure.

Another aspect of the present disclosure relates to a computer program product comprising a computer program which, when executed by a processor, implements any method as described in present disclosure.

Another aspect of the present disclosure relates to an apparatus comprising means for performing any method as described in the present disclosure.

### BRIEF DESCRIPTION OF THE DRAWINGS

The above and other purposes and advantages of the present disclosure will be further described below in conjunction with specific embodiments and with reference to the accompanying drawings. In the drawings, same or corresponding technical features or components will be indicated by same or corresponding reference numerals.
FIG. 1 illustrates an exemplary block diagram of an electronic device according to an embodiment of the present disclosure.
FIG. 2 illustrates an exemplary block diagram of an electronic device according to an embodiment of the present disclosure.
FIG. 3 illustrates a flowchart of an exemplary method according to an embodiment of the present disclosure.
FIG. 4 illustrates a flowchart of an exemplary method according to an embodiment of the present disclosure.
FIG. 5 illustrates an exemplary flowchart of a conventional process for transmitting a data stream.
FIG. 6 illustrates an exemplary data flow according to an embodiment of the present disclosure.
FIG. 7 illustrates an exemplary flowchart of a process according to an embodiment of the present disclosure.
FIGS. 8A -8B illustrate types of data that are transmitted under different prediction performance conditions according to embodiments of the present disclosure.
FIG. 9A illustrates a schematic diagram of a training architecture according to an embodiment of the present disclosure.
FIG. 9B illustrates a schematic diagram of another training architecture according to an embodiment of the present disclosure.
FIG. 9C illustrates a schematic diagram of another training architecture according to an embodiment of the present disclosure.
FIG. 10 illustrates a signaling process for model training according to an embodiment of the present disclosure.
FIG. 11 illustrates a schematic diagram for computing a differential model according to an embodiment of the present disclosure.
FIG. 12 illustrates a schematic diagram of a training process according to an embodiment of the present disclosure.
FIG. 13 illustrates a schematic diagram of an Internet of Things (IoT) communication system according to an embodiment of the present disclosure.
FIG. 14 is a block diagram showing a first example of a schematic configuration of a gNB to which the technology of the present disclosure may be applied.
FIG. 15 is a block diagram showing a second example of a schematic configuration of a gNB to which the technology of the present disclosure may be applied.
FIG. 16 is a block diagram showing an example of a schematic configuration of a communication device to which the technology of the present disclosure may be applied.
FIG. 17 is a block diagram showing an example of a schematic configuration of a vehicle navigation device to which the technology of the present disclosure may be applied.

While the embodiments described in the present disclosure may be susceptible to various modifications and alternative forms, specific embodiments thereof are shown by way of example in the drawings and described in detail herein. It should be understood, however, that the drawings and detailed description are not intended to limit the embodiments to the disclosed particular forms, but on the contrary, the intention is to cover all modifications, equivalents and alternatives that fall within the spirit and scope of the claims.

### DETAILED DESCRIPTION

Exemplary embodiments of the present disclosure will be described below with reference to the accompanying drawings. For the sake of clarity and conciseness, not all features of the embodiments are described in the specification. It should be understood, however, that many implementation-specific settings must be made in implementing an embodiment in order to achieve the developer's specific goals, for example, to meet those constraints associated with the device and business, and that these constraints may vary from one implementation to another. Moreover, it should also be understood that development work, while potentially very complex and time-consuming, would only be a routine undertaking for those skilled in the art having the benefit of the present disclosure.

Here, it should also be noted that in order to avoid obscuring the present disclosure with unnecessary details, only the processing steps and/or device structures that are closely related to at least the solution according to the present disclosure are shown in the drawings, while other details that are of little relevance to the present disclosure are omitted.

### 1. Exemplary Devices

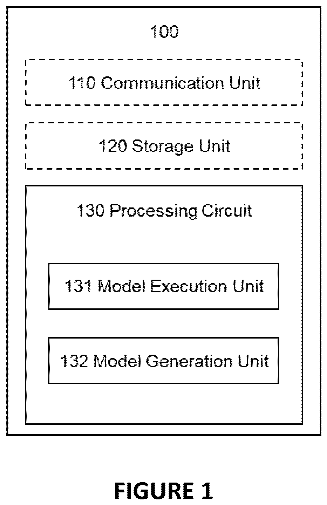

FIG. 1 illustrates an exemplary block diagram of an electronic device 100 according to an embodiment of the present disclosure. The electronic device 100 may include a communication unit 110, a storage unit 120, and a processing circuit 130. The electronic device 100 may be implemented on a network (NW) side in a communication system. Therefore, the electronic device 100 may be referred to as a network-side device or a control-side device. Herein, an NW device is used to represent the network-side device or the control-side device. In some embodiments, the NW device may be implemented as a base station (BS). The electronic device 100 may be used to perform one or more operations related to the BS described herein. Specifically, the electronic device 100 may be implemented as the BS itself, as a part of the BS, or as a control device for controlling the BS. For example, the electronic device 100 may be implemented as a chip for controlling the BS. In some embodiments herein, the electronic device 100 is implemented as the BS itself, which is merely for the convenience of description and is not intended to constitute a limitation. In other embodiments, the electronic device 100 may be implemented as another NW devices that is associated with the base station.

The communication unit 110 of the electronic device 100 may be used to receive or send radio transmissions. The communication unit 110 may be used to establish and maintain one or more communication links. Each communication link may carry an associated transmission. For example, the one or more communication links may be a communication link between the electronic device 100 and a user-side device (e.g., an electronic device 200). In some embodiments, the communication link may be a new radio (NR) communication link. The communication unit 110 may perform functions such as up-conversion, digital-to-analog conversion on a radio signal that is to be sent, and/or perform functions such as down-conversion, analog-to-digital conversion on a radio signal that is received. The communication unit 110 may be implemented using various technologies. For example, the communication unit 110 may be implemented as a communication interface component, such as an antenna device, a radio frequency circuit, and a part of a baseband processing circuit. In FIG. 1, the communication unit 110 is drawn with dashed lines, as it may be alternatively located within the processing circuit 130 or external to the electronic device 100.

The storage unit 120 of the electronic device 100 may store information generated by the processing circuit 130, information received from or to be sent to other devices through the communication unit 110, programs, machine codes, and data used for operations of the electronic device 100, and the like. According to an embodiment of the present disclosure, the storage unit 120 may store data streams to be transmitted, prediction models, predicted data blocks, data used for generating or training prediction models and/or other associated data. The storage unit 120 may be a volatile memory and/or a non-volatile memory. For example, the storage unit 120 may include, but is not limited to, a random access memory (RAM), a dynamic random access memory (DRAM), a static random access memory (SRAM), a read-only memory (ROM) and a flash memory. The storage unit 120 is drawn with dashed lines, as it may be alternatively located within the processing circuit 130 or external to the electronic device 100.

The processing circuit 130 of the electronic device 100 may be configured to perform one or more operations, thereby providing various functions of the electronic device 100. For example, the processing circuit 130 may perform corresponding operations by executing one or more executable instructions stored in the storage unit 120. The processing circuit 130 may be used to implement one or more steps performed by a control-side device in various methods according to embodiments of the present disclosure. These methods include, but are not limited to, a communication method that is based on a prediction model and/or a training method and an updating method for the prediction model as described below.

According to an embodiment of the present disclosure, the processing circuit 130 may execute the communication method based on a prediction model as described herein. To this end, the processing circuit 130 may include a model execution unit 131. The model execution unit 131 may be configured to execute the communication method based on the prediction model. For example, the model execution unit 131 may be configured to: receive a data stream, the data stream including at least a first data block and a second data block; send the first data block to a UE; generate a second predicted data block using the prediction model based on the first data block; generate a second differential data block based on a difference between the second data block and the second predicted data block; and send the second differential data block to the UE. The model execution unit 131 may also perform one or more additional steps that are associated with the method. Details about the method will be further described below.

According to an optional embodiment of the present disclosure, the processing circuit 130 may perform a training method and/or an updating method for a prediction model as described herein. To this end, the processing circuit 130 may further include a model generation unit 132. The model generation unit 132 may be configured to perform the training method and/or the updating method for the prediction model. Details about those methods will be further described below.

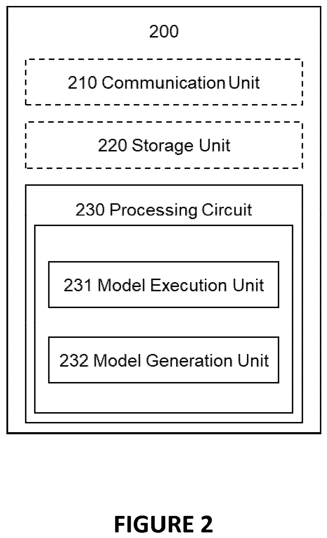

FIG. 2 illustrates an exemplary block diagram of an electronic device 200 according to an embodiment of the present disclosure. The electronic device 200 may include a communication unit 210, a storage unit 220, and a processing circuit 230. The electronic device 200 may be implemented on a user side in a communication system. Therefore, the electronic device 200 may be referred to as a user-side device. Herein, a UE is used to represent the user-side device. The UE may be implemented as various types of clients. In some embodiments, the UE may be implemented as a user terminal in a cellular network. In other embodiments, the UE may be implemented as a sensor in an IoT architecture. The electronic device 200 may be used to perform one or more operations related to the UE as described herein. Specifically, the electronic device 200 may be implemented as the UE itself, as a part of the UE, or as a control device for controlling the UE. For example, the electronic device 200 may be implemented as a chip for controlling the UE. In some embodiments herein, the electronic device 200 is implemented as the UE itself, which is merely for the convenience of description and is not intended to constitute a limitation.

The communication unit 210 of the electronic device 200 may be used to receive or send radio transmissions. The communication unit 210 may be used to establish and maintain one or more communication links. Each communication link may carry an associated transmission. For example, the one or more communication links may be a communication link between the electronic device 200 and a network-side device (e.g., the electronic device 100). In an embodiment of the present disclosure, the communication unit 210 may perform functions such as up-conversion, digital-to-analog conversion on a radio signal that is to be sent, and/or perform functions such as down-conversion, analog-to-digital conversion on a radio signal that is received. The communication unit 210 may be implemented using various technologies. For example, the communication unit 210 may be implemented as a communication interface component, such as an antenna device, a radio frequency circuit, and a part of a baseband processing circuit. In FIG. 2, the communication unit 210 is drawn with dashed lines, as it may be alternatively located within the processing circuit 230 or external to the electronic device 200.

The storage unit 220 of the electronic device 200 may store information generated by the processing circuit 230, information received from or to be sent to other devices through the communication unit 210, programs, machine codes, and data for operations of the electronic device 200, and the like. According to an embodiment of the present disclosure, the storage unit 220 may store received data streams, prediction models, predicted data blocks, data used for generating or training prediction models and/or other associated data. The storage unit 220 may be a volatile memory and/or a non-volatile memory. For example, the storage unit 220 may include, but is not limited to, a random access memory (RAM), a dynamic random access memory (DRAM), a static random access memory (SRAM), a read-only memory (ROM) and a flash memory. The storage unit 220 is drawn with dashed lines, as it may be alternatively located within the processing circuit 230 or external to the electronic device 200.

The processing circuit 230 of the electronic device 200 may be configured to perform one or more operations, thereby providing various functions of the electronic device 200. The processing circuit 230 may perform corresponding operations by executing one or more executable instructions stored in the storage unit 220. The processing circuit 230 may be used to implement one or more steps performed by a user-side device in various methods according to embodiments of the present disclosure. These methods include, but are not limited to, a communication method that is based on a prediction model and/or a training method and an updating method for a prediction model as described below.

According to an embodiment of the present disclosure, the processing circuit 230 may execute the communication method based on a prediction model as described herein. To this end, the processing circuit 230 may include a model execution unit 231. The model execution unit 231 may be configured to execute the communication method based on the prediction model. For example, the model execution unit 231 may be configured to: receive a first data block in a data stream from a base station; generate a second predicted data block using a prediction model based on the first data block; receive a second differential data block from the base station; and recover a second data block in the data stream based on a sum of the second predicted data block and the second differential data block. The model execution unit 231 may also perform one or more additional steps that are associated with the method. Details about the method will be further described below.

According to an optional embodiment of the present disclosure, the processing circuit 230 may perform a training method and/or an updating method for the prediction model as described herein. To this end, the processing circuit 230 may further include a model generation unit 232. The model generation unit 232 may be configured to perform the training method and/or the updating method for the prediction model. Details about those methods will be further described below.

It should be noted that the various units described above are exemplary and/or preferred modules for implementing the processes described in the present disclosure. These modules may be hardware units (such as central processing units, field programmable gate arrays, digital signal processors or application specific integrated circuits, etc.) and/or software modules (such as computer readable programs). The above content is not exhaustive description of each module that is used for implementing various steps described below. However, as long as there is a step for performing a certain process, there may be a corresponding module or unit (implemented by hardware and/or software) for implementing that process. Technical solutions defined by all combinations of steps described below and units corresponding to those steps are included in the content of the present disclosure, as long as the technical solutions they constitute are complete and applicable.

Furthermore, a device constituted by the various units may be incorporated into a hardware device (such as a computer) as a functional module. In addition to those functional modules, the electronic device may of course have other hardware or software components.

### 2. Exemplary Methods

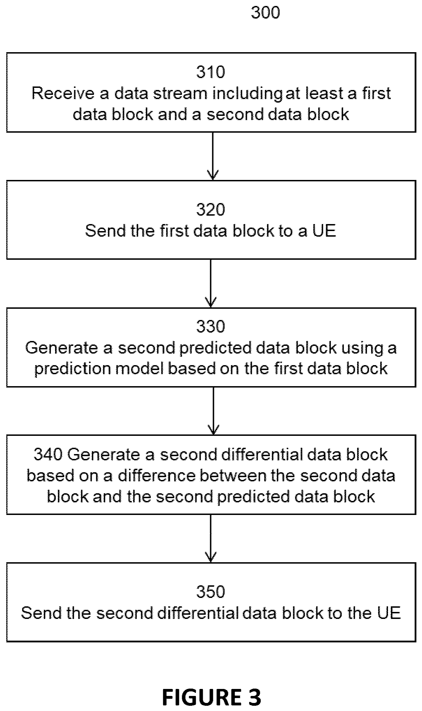

FIG. 3 illustrates a flowchart of an exemplary method 300 according to an embodiment of the present disclosure. The exemplary method 300 is a communication method that is based on a prediction model and is performed on side of an NW device according to an embodiment of the present disclosure. The method 300 may be performed by the above electronic device 100, specifically, may be performed by the processing circuit 130 of the electronic device 100.

The method 300 may begin with step 310. In this step, the NW device may be configured to receive a data stream, which includes at least a first data block and a second data block. Then, in step 320, the NW device may be configured to send the first data block to a user equipment (UE). In step 330, the NW device may be configured to generate a second predicted data block using the prediction model and based on the first data block. In step 340, the NW device may be configured to generate a second differential data block based on a difference between the second data block and the second predicted data block. In step 350, the NW device may be configured to send the second differential data block to the UE. As will be further explained below, the second differential data block as generated by the method 300 has a smaller transmitted amount of data, thereby reducing communication overhead. As described below, the method 300 may include one or more optional or preferred steps.

According to an embodiment of the present disclosure, during the execution of the method 300, the NW device may be configured to select to perform different operations based on prediction performance of the prediction model. In some embodiments, in response to the prediction performance of the prediction model being higher than a first predetermined performance condition, the NW device may not send the second differential data block to the UE. Additionally or optionally, in response to the prediction performance of the prediction model being lower than a second predetermined performance condition, the NW device may send to the UE an update to the prediction model. Additionally or optionally, in response to the prediction performance of the prediction model being lower than a third predetermined performance condition, the NW device may send to the UE auxiliary information associated with the second data block. Additionally or optionally, in response to the prediction performance of the prediction model being lower than a fourth predetermined performance condition, the NW device may stop using the prediction model. Each of the predetermined performance conditions may be set as needed. Those predetermined performance conditions are merely exemplary. Some of these predetermined performance conditions or other performance conditions may be used in combination. By performing different operations selectively based on the prediction performance of the prediction model, it may improve flexibility of the method 300 while ensuring reliability of communication.

Various indicators may be used to measure the prediction performance of the prediction model. In some embodiments, the prediction performance of the prediction model may be determined based at least in part on the workload that will be used to compensate for a prediction error. For example, the prediction performance of the prediction model may be determined based on a size of the differential data block (e.g., the second differential data block generated in step 340). Additionally or optionally, in an embodiment where the prediction model is formed by multiple iterations, the prediction performance of the prediction model may be determined based on characteristics of a differential model between two iterations that are used to form the prediction model.

According to an embodiment of the present disclosure, the data stream may be various types of data streams, including but not limited to a video data stream, an audio data stream, a control data stream, or a sensor data stream. Furthermore, the method of the present disclosure may be applied to a data stream of another modality. In an embodiment where the data stream is a video data stream, the first data block may preferably be a base reference frame in the video data stream. In an embodiment where the data stream is another type of data stream, the first data block may be a base data block that is defined for the other type of data stream.

According to an embodiment of the present disclosure, the method 300 may process one or more subsequent data blocks in the data stream in a manner similar to the second data block. For example, when the data stream further includes at least a third data block, the NW device may be configured to generate a third predicted data block using the prediction model. The NW device may generate a third differential data block based on a difference between the third data block and the third predicted data block. Then, the NW device may send the generated third differential data block to the UE.

According to an embodiment of the present disclosure, the method 300 may further include using a distributed training method to train the prediction model used. In some embodiments, the NW device may be connected to a plurality of UEs. The NW device may be configured to receive from the plurality of UE a plurality of prediction sub-models that are trained for different types of data streams. The NW device may be configured to aggregate the received plurality of prediction sub-models to generate the prediction model. For example, the NW device may receive a first prediction sub-model from a first UE in the plurality of UEs, the first prediction sub-model being trained based on one or more first data streams, and the first data stream belonging to a first type of data stream. The NW device may further receive a second prediction sub-model from a second UE in the plurality of UEs, the second prediction sub-model being trained based on one or more second data streams, and the second data stream belonging to a second type of data stream. In some embodiments, the second type of data stream may be the same as the first type of data stream. Preferably, the second type of data stream may be different from the first type of data stream. Then, the NW device may aggregate at least the first prediction sub-model and the second prediction sub-model to generate a global prediction model as the prediction model used in step 330.

In an optional and additional embodiment, the NW device itself may also train a prediction sub-model for aggregation into the global prediction model. For example, the NW device may train a third prediction sub-model locally. In this case, the NW device may aggregate the first prediction sub-model and the second prediction sub-model trained by the UEs, and the third prediction sub-model trained by the NW device to generate the global prediction model.

According to an embodiment of the present disclosure, the data streams used to train each prediction sub-model may be one or both of a downlink (DL) data stream and an uplink (UL) data stream between the NW device and the UE. In some embodiments, the data stream used for training is a unidirectional data stream. Preferably, bidirectional data streams (both DL and UL data streams) are used to improve accuracy of the prediction sub-model. The bidirectional data streams used may be two data streams of a same type, or two data streams of different types.

According to an embodiment of the present disclosure, the data streams used to train the prediction sub-model may include but are not limited to a video data stream, an audio data stream, a control data stream or a sensor data stream. The above first type of data stream and the second type of data stream may be different types from those various types.

According to an embodiment of the present disclosure, the NW device may assign different stream identifiers (stream IDs) to different data streams. Each stream ID may uniquely identify a particular data stream. The stream ID may include an identifier that identifies the type of the particular data stream and/or an identifier of a direction (i.e., DL or UL). The NW device may broadcast a plurality of stream IDs of a plurality of data streams to the UE. Then, by indicating a particular stream ID in the plurality of stream IDs to a particular UE, the NW device may indicate that a particular data stream associated with the particular stream ID will be used as an input to a prediction sub-model that is trained by the particular UE. For example, the NW device may send to the first UE a stream identifier associated with each of one or more data streams between the NW device and the first UE. Further, the NW device may send to the first UE a stream identifier associated with one or more first data streams in the one or more data streams to indicate the first UE to use the one or more first data streams to train the first prediction sub-model. According to an embodiment of the present disclosure, the one or more first data streams are selected from the one or more data streams based on capabilities and/or resources of the first UE. Similarly, the NW device may perform similar operations for other UEs in the plurality of UEs, so as to train one or more other prediction sub-models.

According to an embodiment of the present disclosure, when training or updating the prediction model, the NW device may determine a respective differential model between the aggregated global prediction model and a local prediction model of each of a plurality of UEs. The NW device may send, to each UE in a selected set of UEs of the plurality of UEs, a respective differential model that is associated with that UE, for updating a local prediction model of that UE. The selected set of UEs may be a full set or a subset of the plurality of UEs. In some embodiments, the set of UEs may be selected based on the performance of the prediction model.

In addition, the prediction performance of the local prediction model of a particular UE in the plurality of UEs may be determined based on a respective differential model associated with the particular UE. Preferably, different operations may be performed selectively based on the determined prediction performance of the local prediction model. For example, in response to the particular differential model associated with the particular UE among the plurality of UEs satisfying a first predetermined criterion, the NW device may send a first instruction to the particular UE, the first instruction instructing the particular UE no need to update the local prediction model of the particular UE in the subsequent federated leaming process. Additionally or alternatively, in response to the particular differential model satisfying a second predetermined criterion, the NW device may send a second instruction to the particular UE, the second instruction instructing the particular UE to stop using the local prediction model of the particular UE to recover a data stream that is received from the NW device.

It should be understood that what is described above is merely an exemplary embodiment of the method 300. Details of various embodiments of the method 300 as well as additional or optional embodiments will be further described below.

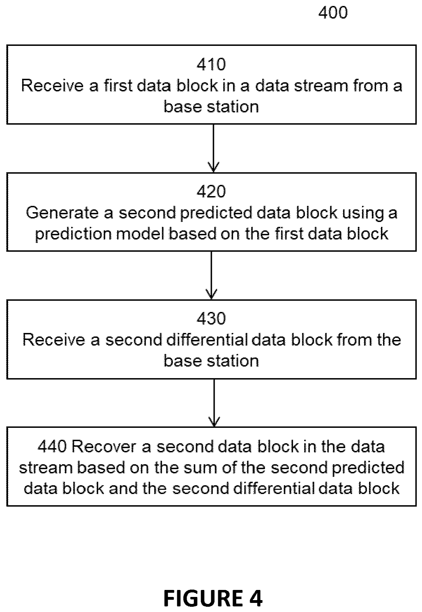

FIG. 4 illustrates a flowchart of an exemplary method 400 according to an embodiment of the present disclosure. The exemplary method 400 is a communication method that is based on a prediction model and is performed on side of a UE according to an embodiment of the present disclosure. The method 400 may be performed by the above electronic device 200, specifically, may be performed by the processing circuit of the electronic device 200.

The method 400 may begin with step 410. In this step, the UE may be configured to receive a first data block in a data stream from an NW device. Then, in step 420, the UE may be configured to generate a second predicted data block using a prediction model and based on the first data block. In step 430, the UE may be configured to receive a second differential data block from the NW device. In step 440, the UE may be configured to recover a second data block in the data stream based on a sum of the second predicted data block and the second differential data block. Corresponding to the method 300, the method 400 may reduce the transmitted amount of data. As described below, the method 400 may further include one or more optional or preferred steps.

According to an embodiment of the present disclosure, the UE may be configured to perform different operations selectively based on prediction performance of the prediction model. In some embodiments, in response to the prediction performance of the prediction model being higher than a first predetermined performance condition, the UE may not receive the second differential data block from the NW device but amy use the second predicted data block as the second data block. Additionally or optionally, in response to the prediction performance of the prediction model being lower than a second predetermined performance condition, the UE may receive an update to the prediction model from the NW device, and update the prediction model based on the update. Additionally or optionally, in response to the prediction performance of the prediction model being lower than a third predetermined performance condition, the UE may receive auxiliary information associated with the second data block from the NW device, and recover the second data block based at least in part on the auxiliary information. Additionally or optionally, in response to the prediction performance of the prediction model being lower than a fourth predetermined performance condition, the UE may stop using the prediction model.

As described above, various indicators may be used to measure the prediction performance of the prediction model, including but not limited to the size of the differential data block and/or the characteristics of the differential model. In some embodiments, the prediction performance of the prediction model may be indicated to the UE by the NW device. In other embodiments, the UE itself may determine the prediction performance of the prediction model.

As described above, the data stream may be various types of data streams, including but not limited to a video data stream, an audio data stream, a control data stream, or a sensor data stream. In an embodiment where the data stream is a video data stream, the first data block may be a base reference frame in the video data stream.

When the data stream additionally includes at least a third data block, the UE may recover the third data block in a similar manner. Specifically, the UE may generate a third predicted data block using the prediction model. The UE may receive a third differential data block from the NW device. The UE may recover the third data block in the data stream based on a sum of the third predicted data block and the third differential data block.

According to an embodiment of the present disclosure, the UE may participate in the distributed training of the prediction model. In some embodiments, the UE may train a first prediction sub-model based on one or more first data streams between the UE and the NW device, the first data stream belonging to a first type of data stream. The UE may send the trained first prediction sub-model to the NW device. Then, the UE may receive a global prediction model, which is an aggregation of the first prediction sub-model and one or more other prediction sub-models. The one or more other prediction sub-models include at least a second prediction sub-model that is trained based on one or more second data streams. The second data stream belongs to a second type of data stream. The second type of data stream may be different from the first type of data stream. After receiving the global prediction model, the UE may update, based on the global prediction model, the prediction model used in step 420.

In an optional additional embodiment, the global prediction model additionally aggregates a prediction sub-model that is trained by the NW device. For example, in addition to the first prediction sub-model and the second prediction sub-model that are trained by respective UEs, the above one or more other prediction sub-models may further include a third prediction sub-model that is trained by the NW device.

According to an embodiment of the present disclosure, the one or more first data streams used by the UE to train the first prediction sub-model may include one or both of a downlink data stream and/or an uplink data stream between the UE and the NW device. The first type of data stream and the second type of data stream may be different types of the following data streams: a video data stream, an audio data stream, a control data stream, or a sensor data stream.

According to an embodiment of the present disclosure, the UE may receive from the NW device a stream identifier associated with each of the one or more data streams between the NW device and the UE. In order to identify the data stream that is to be used for training the first prediction sub-model, the UE may further receive from the NW device stream identifier(s) associated with one or more first data streams. According to the received stream identifier(s) associated with the one or more first data streams, the UE may train the first prediction sub-model based on the one or more first data streams in the one or more data streams.

According to an embodiment of the present disclosure, the UE may send to the NW device a capability indication of the UE related to training. The capability indication may be based on various factors such as a computing capability, communication resources, or a battery status of the UE, etc. The NW device may select, based on the indication, a data stream suitable for the UE to match the UE's capability.

According to an embodiment of the present disclosure, when updating or training the prediction model, the UE may receive a respective differential model (rather than the complete global prediction model) between the global prediction model and the prediction model of the UE. The UE may recover the complete prediction model based on the differential model.

According to an embodiment of the present disclosure, based on the prediction performance of the determined local prediction model, the UE may receive different instructions from the NW device. According to a first instruction received from the NW device, the UE may not update the prediction model. Additionally or alternatively, according to a second instruction received from the NW device, the UE may stop using the prediction model to recover the data stream received from the NW device.

It should be understood that what is described above is merely an exemplary embodiment of the method 400. Details of various embodiments of the method 400 as well as additional or alternative embodiments will be further described below.

### 3. Exemplary Data Transmissions

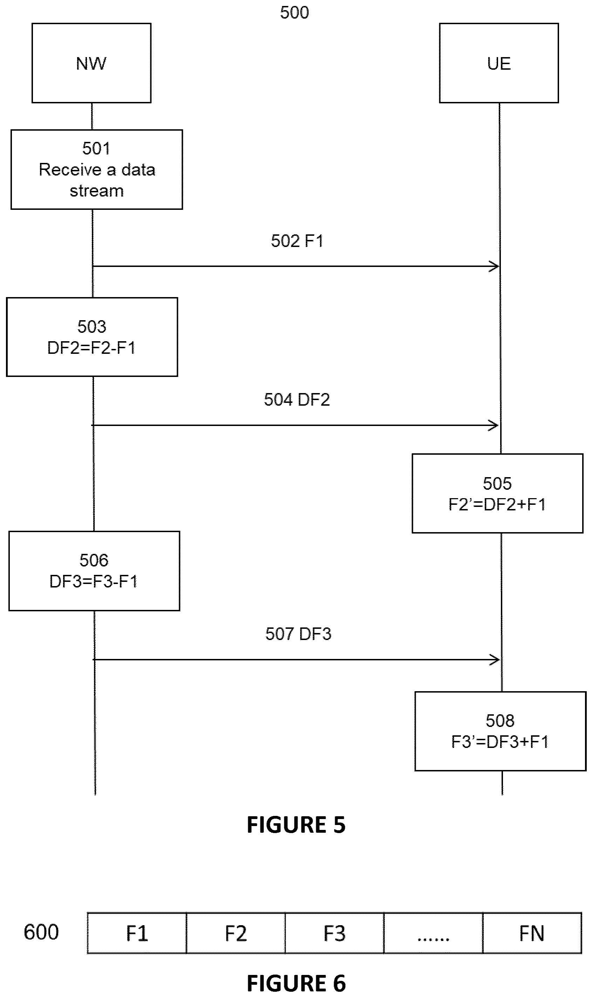

FIG. 5 illustrates an exemplary flowchart of a conventional process 500 for transmitting a data stream. The conventional process 500 may be implemented in a communication system including an NW (which is implemented by the above electronic device 100) and a UE (which is implemented by the above electronic device 200).

In step 501, the NW may be configured to receive a data stream. The data stream may be generated locally by the NW or received from another device. The received data stream may include a sequence of data blocks to be transmitted. The sequence may include a plurality of data blocks in series. The data stream may be any of a variety of types of data streams, including but not limited to a video data stream, an audio data stream, a control data stream, or a sensor data stream that may be used in XR.

FIG. 6 illustrates a data stream 600 according to an embodiment of the present disclosure. The data stream 600 may be an example of the data stream in FIG. 5. As shown, the data stream 600 may include N data blocks, represented as data blocks F1, F2, F3... FN. The data blocks may be divided as needed. In one example, when the data stream 600 represents a video data stream, each of the data blocks F1, F2, F3... FN may represent one video frame. In other examples, each data block may include multiple video frames. Preferably, the size of each data block may be the same, or the sizes may be different.

The first data block (F1) in the data stream 600 may be a base data block in the data stream. The base data block may contain reference information for the content associated with the data stream. For example, when the data stream is a video data stream, the base data block may be a base reference frame in the video data stream. The base reference frame may contain reference information associated with the video content, such as information describing a scene of the video (including but not limited to the background, a main object, etc.). In some embodiments, the base reference frame may be an I-frame in the video data stream. The I-frame may also be referred to as an intra-frame or a full frame compression frame. The I-frame may serve as a reference point for random access. Other data blocks F2...FN in the data stream 600 may be a forward differential frame (P-frame) or a backward differential frame (B-frame). It should be understood that although the present disclosure mainly describes a communication method based on a prediction model for a video data stream, the method may also be applied to other types of data streams.

The conventional process 500 may then proceed to step 502. In this step, the NW may be configured to send the first data block F1 in the received data stream to the UE.

Then, in step 503, the NW calculates the difference between the second data block (F2) to be sent and the first data block F1. The difference may be represented by a differential data block (DF2), that is, DF2 = F2 - F1. The subtraction symbol "-" herein denotes determining a difference between two data blocks. Various algorithms for calculating the difference may be used. For example, when each of the data blocks represents a video frame, the difference between pixel values of two corresponding pixels in the two video frames may be calculated as the value of a corresponding pixel in the differential data block (that is, the differential video frame). When the data blocks F1 and F2 are sufficiently similar, values of many pixels in the differential data block DF2 will be zero or close to zero. In other embodiments, the difference between the two data blocks may be measured in other ways.

Then, in step 504, instead of sending the second data block F2, the NW sends the differential data block DF2, which is associated with the second data block F2. Compared with transmitting the second data block F2 itself, the amount of data required to transmit the differential data block DF2 is usually smaller. For example, the differential data block DF2 has many pixels with values of zero or close to zero, so that it may be compressed more efficiently. Compared with transmitting the second data block F2, transmitting the differential data block DF2 may reduce the transmitted amount of data, thereby reducing overhead.

In response to receiving the differential data block DF2, the UE may recover the second data block F2 in step 505. Specifically, the UE may generate a recovered second data block (F2') based on the first data block F1 (received in step 502) and the differential data block DF2 (received in step 504). In some embodiments, the recovered second data block may be calculated as F2' = F1 + DF2. The addition symbol "+" denotes the inverse of the process denoted by the subtraction symbol "-" as described above. After obtaining the recovered second data block F2', the UE may present the content of the data stream, such as the video content, to the user based on F1 and F2'.

Steps 503-505 may be repeated for other data blocks in the data stream (e.g., F3, F4...FN). As an example, FIG. 5 illustrates an example regarding the third data block (F3). In step 506, the NW calculates a third differential data block DF3 = F3 - F1, which is associated with F3. Then, in step 507, the NW transmits the third differential data block DF3 to the UE. In step 508, based on the received DF3 and F1, the UE obtains a recovered third data block F3' = DF3 + F1. In other embodiments, the NW may calculate the third differential data block DF3 in other ways. For example, DF3 may be calculated as a difference between F3 and F2 (rather than the difference between F3 and F1), that is, DF3 = F3 - F2. Accordingly, the UE may obtain the recovered F3' based on the recovered F2' and the received DF3, that is, F3 = DF3 + F2'.

By transmitting the differential data blocks instead of original data blocks, the conventional process 500 may reduce the transmitted amount of data to a certain extent. However, in order to meet the needs of transmission of a variety of types of data streams in XR scenarios, it is expected to further reduce the transmitted amount of data.

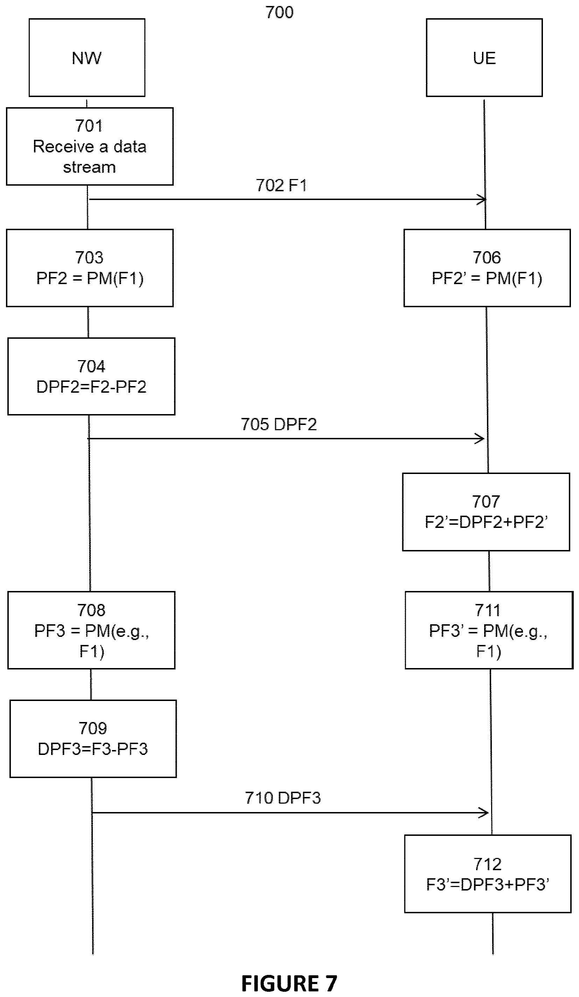

FIG. 7 illustrates an exemplary flowchart of a process 700 according to an embodiment of the present disclosure. The process 700 implements a communication method based on a prediction model. The process 700 may be implemented in a communication system including an NW (which is implemented by the above electronic device 100) and a UE (which is implemented by the above electronic device 200).

In step 701, the NW may be configured to receive a data stream. This step is similar to step 501. The data stream may be the same as the data stream described in step 501 of FIG. 5. The data stream includes, but is not limited to, a video data stream, an audio data stream, a control data stream, or a sensor data stream that may be used in XR. One example of the data stream is the data stream 600 depicted in FIG. 6.

The process 700 then proceeds to step 702. In this step, the NW may be configured to send a first data block F1 in the received data stream to a UE. Step 702 is similar to step 502. According to an embodiment of the present disclosure, the first data block F1 may be a base data block in the data stream. For example, when the data stream is a video data stream, the base data block may be a base reference frame in the video data stream. In some embodiments, the base reference frame may be an I-frame in the video data stream. When the data stream is of another type, the first data block F1 may be a base data block for the other type.

The process 700 then proceeds step 703. In this step, the NW is configured to predict a second data block based on the first data block F1, thereby generating a second predicted data block (PF2). Specifically, a prediction model (denoted as PM) may be used to generate the second predicted data block PF2. The prediction model PM may accept the first data block F1 as input. The prediction model PM may predict, based on F1 and through artificial intelligence technology, the predicted data block PF2 corresponding to the second data block F2. This process is denoted as PF2=PM(F1). The second predicted data block PF2 is a data block generated by artificial intelligence technology, not the actual second data block F2. By using a well-trained prediction model, the second predicted data block PF2 may be close to the actual second data block F2.

According to an embodiment of the present disclosure, the prediction model may be a model of various types that is based on artificial intelligence technology, which may be trained to predict, based on one or more data blocks in a data stream, one or more subsequent data blocks. The prediction model may adopt existing or future developed artificial intelligence technology or models, including but not limited to convolutional neural network (CNN), deep neural network (DNN), recurrent neural network (RNN), long short-term memory (LSTM) and their variants or enhancement algorithms. Once trained, the prediction model may be distributed to the NW and the UE, so as to keep the the NW and the UE using the same prediction model for prediction. In a preferred embodiment, the prediction model may be trained by a model training method described below. However, it may be understood that the model training method described herein is not necessary for training the prediction model.

The process 700 then proceeds step 704. In this step, the NW is configured to calculate a difference between the second data block F2 to be sent and the second predicted data block PF2. The difference may be represented by a differential data block (DPF2), that is, DPF2 = F2 - PF2. As described above, the subtraction symbol "-" denotes determining a difference between two data blocks. Various algorithms for calculating the difference may be used.

The process 700 then proceeds step 705. In this step, the NW is configured to send the differential data block DPF2 that is associated with the second data block F2. When the performance of the prediction model PM is good, the second predicted data block PF2 will be closer to the actual second data block F2 than the first data block F1. In other words, the difference represented by the differential data block DPF2 is smaller than that of the differential data block DF2. Therefore, as compared with transmitting the differential data block DF2, transmitting the differential data block DPF2 may further reduce the amount of data to be transmitted.

Optionally, before sending DPF2, DPF2 may be appropriately encoded and compressed to take full advantage of the fact that DPF2 is representative of a small difference. When the same encoding and compression techniques are applied to DPF2 and DF2, the resulting compressed version of the differential data block DPF2 is also typically smaller than that of the differential data block DF2.

At the receiving side, the UE may perform in step 706 a prediction operation that is similar to step 703, to generate a second predicted data block (PF2'). Specifically, the UE may use the prediction model PM to generate the second predicted data block PF2' based on the received first data block F1. The prediction model PM used by the UE may be the same as the prediction model PM used by the NW in step 703. Since the inputs of both prediction models are F1 (the transmission loss in step 702 is negligible), the second predicted data block PF2' obtained in step 706 may be considered to be substantially the same as the second predicted data block PF2 obtained in step 703.

In response to receiving the differential data block DPF2 from the NW, the UE may generate, based on the received differential data block DPF2 and the locally generated second predicted data block PF2', a recovered second data block F2' in step 707. Specifically, the UE may obtain the recovered second data block F2' by summing the differential data block DPF2 and the second predicted data block PF2', that is, F2' = DPF2 + PF2'. After obtaining the recovered second data block F2', the UE may present the content of the data stream, such as video content, to the user based on F1 and F2'.

Those skilled in the art may understand that the order of the steps described in FIG. 7 is merely illustrative. Some of the steps may be performed in other orders. For example, step 702 and steps 703-704 may be performed concurrently. Alternatively, step 706 and steps 703-704 may be performed concurrently. Alternatively, step 706 may be performed after step 705.

For other data blocks in the data stream (e.g., F3, F4...FN), steps 703-707 may be repeated. As an example, FIG. 7 illustrates an example process regarding the third data block F3. In step 708, the NW generates a third predicted data block (PF3) using a prediction model PM. In step 709, the NW calculates a difference between the third predicted data block PF3 and the third data block F3 as a third differential data block (DPF3). In step 710, the NW sends the third differential data block DPF3 to the UE. In step 711, the UE generates locally a third predicted data block (PF3') using the prediction model PM. Then, in step 712, the UE generates a recovered third data block F3' based on the received third differential data block DPF3 and the generated third predicted data block PF3'. This process mayrepeat for data blocks F4...FN.

According to different embodiments of the present disclosure, the input to the prediction model PM for generating the third predicted data block PF3 may vary.

In some embodiments, the input to the prediction model PM for generating the third predicted data block PF3 may be F1, i.e., PF3 = PM(F1). It should be noted that although PF2 and PF3 are both generated using the prediction model PM and the input F1, PF2 and PF3 may be different. This is because input parameters of the prediction model PM may further include a position of the data block in the data stream.

In other embodiments, the input to the prediction model PM for generating the third predicted data block PF3 may be the preceding data block of F3, that is, PF3 = PM(F2). Since F2 is closer to F3 than F1, the predicted data block PF3 obtained based on F2 may be more accurate. Accordingly, the predicted data block PF3' at the UE may be predicted based on the predicted data block PF2', that is, PF3' = PM(PF2'). Since PF3' is predicted based on the predicted data block PF2' rather than the actual data block F2, there is a risk of propagation of prediction errors. When the prediction performance of the prediction model PM is good enough, the risk is sufficiently low. Therefore, in an optional embodiment, it may be determined, based on the prediction performance of the prediction model PM, whether to use this method or not. This method is used when the prediction performance of the prediction model PM is higher than a predetermined performance condition. When the prediction performance of the prediction model PM is not higher than the predetermined performance condition, other methods may be used.

In still other embodiments, the input to the prediction model PM for generating the third predicted data block PF3 may be a few data blocks before F3, for example, PF3 = PM(F1, F2). In this case, although the amount of input data becomes larger, a more accurate predicted data block PF3 may be obtained. Accordingly, the predicted data block PF3' at the UE is calculated as PF3' = PM(F1, PF2'). In other embodiments, the prediction model PM for generating the third predicted data block PF3 may also use other inputs, such as DPF2.

For data blocks F4...FN, one or more data blocks before each of the data blocks may be similarly selected as inputs to the prediction model to generate a corresponding predicted data block.

In the embodiment shown in FIG. 7, predicted data blocks PF2 and PF3 are generated one by one. In other embodiments, multiple predicted data blocks (and thus, multiple differential data blocks) may be generated at one time instead. For example, both predicted data blocks PF2 and PF3 may be generated at one time based on the prediction model PM, and then the respective differential data blocks DPF2 and DPF3 may be calculated. DPF2 and DPF3 may be sent to the UE at one time. As described above already, the UE may use F1, DPF2 and DPF3 to generate the recovered data blocks F2', F3' based on the prediction model PM. In a further embodiment, more predicted data blocks and differential data blocks may be generated at one time. For example, the better the prediction performance of the prediction model, the greater the number of predicted data blocks generated at one time.

Compared with the process 500 described above, the process 700 introduces the prediction model PM to generate the predicted data block (PF). The process 700 transmits a differential data block (DPF) between the predicted data block and the actual data block, rather than a differential data block (DF) between the first data block F1 and the actual data block F. When the performance of the prediction model PM is good, the predicted data block PF is close enough to the actual data block, so that the size of the differential data block DPF is smaller than that of the differential data block DF. Therefore, the process 700 may further reduce the amount of transmitted data, thereby reducing communication overhead.

Various indicators may be used to measure the prediction performance of the prediction model PM. In some embodiments, prediction error (PE) of the prediction model PM may be used to characterize the prediction performance of the prediction model PM. The larger the prediction error, the worse the prediction performance. In some cases, the prediction error may be positively correlated with the size of the difference (e.g., differential data block DPF2) between the predicted data block (e.g., PF2) and the actual data block (e.g., F2). In a specific use case, the prediction error may be simply characterized as the size of the differential data block. In other embodiments, the prediction performance of the prediction model may be characterized by a differential model between two iterations that are used to train the prediction model. One or more features of the differential model may characterize the difference between two generations of prediction models obtained in those two iterations. A large difference indicates that the prediction model has not yet converged, resulting in low prediction performance.

According to an optional embodiment of the present disclosure, different operations may be selected based on the prediction performance of the prediction model PM, so as to achieve an optimal effect between communication overhead and communication reliability. Specifically, in response to the prediction performance of the prediction model PM meeting different performance conditions, the NW may transmit different data.

In some embodiments, the NW may determine whether to transmit the differential data block DPF2 based on the prediction performance of the prediction model PM. In response to the prediction performance of the prediction model PM being higher than a first predetermined performance condition, the transmission of the differential data block DPF2 may be omitted in step 705. When the prediction performance of the prediction model PM is high enough, the predicted data block PF2 generated based on the prediction model PM will be close enough to the actual data block F2. This means that the PF2' obtained by the UE in step 706 based on the received F1 and the local prediction model PM will be close enough to the actual data block F2. Therefore, in order to recover the second data block F2, the UE does not need to receive the differential data block DPF2 from the NW. In this case, the second data block recovered in step 707 may be approximately calculated as F2' = PF2'. This approximation will not significantly deteriorate the user experience. The transmission of DPF2 in step 705 may be omitted to further save overhead. In a specific implementation, a first predetermined threshold (Th1) associated with the prediction error PE may be set. In response to PE < Th1, the NW may choose to not transmit DPF2. In response to PE ≥ Th1, the NW may choose to transmit DPF2 in step 705.

Alternatively or additionally, the NW may determine whether to transmit an update to the prediction model PM based on the prediction performance of the prediction model PM. The prediction performance of the prediction model PM may decline over time. Therefore, in response to the prediction performance of the prediction model PM being lower than a second predetermined performance condition, the NW may send to the UE an update to the prediction model PM. The update may be an updated prediction model PM, or an increment (change) of the updated prediction model PM relative to the previous prediction model. As further described below, the increment may be represented as a differential model, or further, represented as a feature of the differential model. In keeping with the NW, the UE may use the updated prediction model PM to locally generate the predicted data block (e.g., PF2'). In a specific implementation, a second predetermined threshold (Th2) associated with the prediction error PE may be set. In response to PE > Th2, the NW may choose to initiate an update to the prediction model PM. The NW may then transmit the obtained update. In some embodiments, PE may be characterized by the size of DPF2, while the second predetermined threshold may be characterized by the size of DF2 (the differential data block obtained in the process 500). When PE > Th2, the effect of the process 700 is even worse than that of the conventional process 500. At this time, an update to the prediction model PM may be initiated. When updating the prediction model PM, a number and/or a type of data streams that are used to train the prediction model may be changed and/or increased. For example, when the first prediction sub-model was previously trained using only DL data streams, the first prediction sub-model may be refined by using both DL data streams and UL data streams. Then, the updated prediction model is obtained by aggregating based on the refined first prediction sub-model.

Alternatively or additionally, the NW may determine whether to transmit auxiliary information based on the prediction performance of the prediction model PM. The auxiliary information may be information generated by the NW to compensate/correct the prediction error information according to the prediction error indicator. For example, the auxiliary information may include semantic information obtained according to data content, rotation angle information of a subject of an image, or motion trajectory information, etc. In some embodiments, the auxiliary information may be semantic information (rather than a data block characterizing the difference itself). The auxiliary information may describe the difference between data blocks in a semantic manner. For example, when the data stream is a video data stream, the auxiliary information may describe motion of a specific subject between different frames in the video (for example, the subject moves to the left by a certain number of pixels, or the image rotates a certain angle clockwise, etc.). The auxiliary information may assist the receiving end (for example, the UE) in restoring video images. In some embodiments, in response to the prediction performance of the prediction model PM being lower than a third predetermined performance condition, the NW may send to the UE the auxiliary information that is associated with the second data block F2. In a specific implementation, a third predetermined threshold (Th3) associated with the prediction error PE may be set. In response to PE > Th3, the NW may choose to transmit the auxiliary information. In response to PE ≤ Th3, the NW may choose to not transmit the auxiliary information.

Alternatively or additionally, the NW may determine whether to stop using the prediction model PM based on the prediction performance of the prediction model PM. When the training of the prediction model PM has not yet completed, or when the prediction performance of the prediction model PM is far worse than expected, the prediction model-based process 700 may be stopped and switched to another method (e.g., the method represented by the process 500). Specifically, in response to the prediction performance of the prediction model being lower than a fourth predetermined performance condition, the NW may stop using the prediction model. Additionally, the NW may send a switching indication to the UE to indicate the UE to switch from the process 700 using the prediction model to the other method. In a specific implementation, a third predetermined threshold (Th4) associated with the prediction error PE may be set. In response to PE > Th4, the NW may stop using the prediction model PM. In practice, the fourth predetermined threshold may be much greater than the second predetermined threshold. The fourth predetermined performance condition may also additionally include a training threshold for the number of training times for the prediction model. When the number of training times for the prediction model is lower than the training threshold, the prediction model PM may not be used.

Transmitting different types of data according to one or more performance conditions may improve flexibility and reliability of the communication system, not only taking full advantage of the reduction in communication overhead brought by the communication method based on a prediction model, but also avoiding significant decrease in communication performance due to the decline of the prediction model.

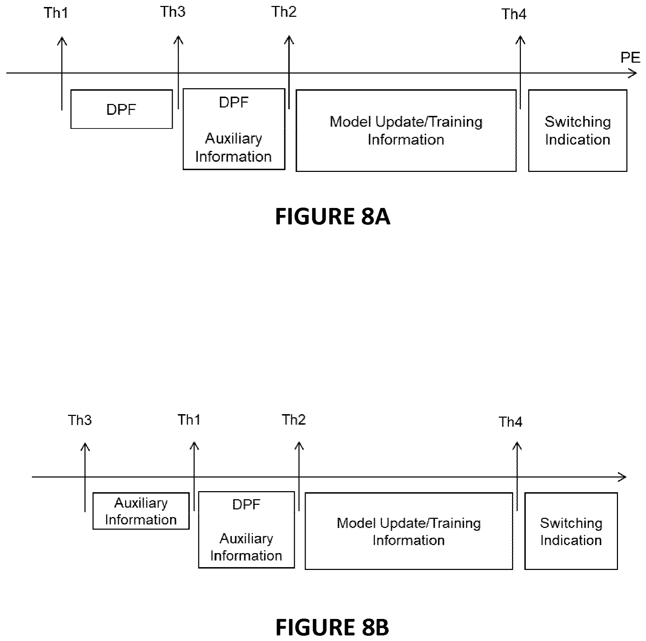

According to an embodiment of the present disclosure, one or more of the above performance conditions may be used in combination. FIG. 8A illustrates the type of data that is transmitted under different prediction performance conditions according to an embodiment of the present disclosure. In this example, Th1<Th3. The horizontal axis represents the prediction error (PE) of the prediction model PM. A differential model between two iterations may be used, instead of PE, to measure the prediction performance of the prediction model.

When PE is less than the threshold Th1, the prediction performance is good enough. Therefore, the NW neither transmits the differential data block DPF nor the auxiliary information. When PE is between threshold Th1 and threshold Th3, the NW may transmit the differential data block DPF without transmitting the auxiliary information. When PE is between threshold Th3 and threshold Th2, the NW may transmit both of the differential data block DPF and the auxiliary information. When PE is between threshold Th2 and threshold Th4, the NW may transmit training information and/or model update, thereby sending the updated refined prediction model to the UE. When PE is greater than Th4, the NW sends a switching indication to stop using the prediction model and switch to another method.

FIG. 8B illustrates the type of data that is transmitted under different prediction performance conditions according to another embodiment of the present disclosure. In this example, Th1>Th3. When PE is less than threshold Th3, the NW neither transmits the differential data block DPF nor the auxiliary information. When PE is between threshold Th3 and threshold Th1, the NW may transmit the auxiliary information without transmitting the differential data block DPF. At this time, the prediction performance of the prediction model is good enough (PE<Th1). Under this condition, it is possible to allow the UE to generate a sufficiently good recovered data block (F') from the local predicted data block (PF') by transmitting the auxiliary information (such as the semantic information, the angle rotation information, etc. mentioned above). Transmission of the complete differential data block (whose data volume is usually greater than that of the auxiliary information) may be omitted. When PE is between threshold Th1 and threshold Th2, the NW may transmit both of the differential data block DPF and the auxiliary information. When PE is between threshold Th2 and threshold Th4, the NW may transmit training information and/or model updates, thereby sending the updated refined prediction model to the UE. When PE is greater than Th4, the NW sends a switching indication to stop using the prediction model and switch to other method.

Those skilled in the art will understand that the combinations shown in FIG. 8A and FIG. 8B are merely exemplary. Without departing from the principles of the present disclosure, other combinations may be implemented without limitation.

The process 700 is particularly suitable for an XR scenario having multimodal data streams. In this scenario, a user may initiate an XR session on the UE (for example, start an XR game). The XR game may run in the cloud (on a game server on network side). In response to the user starting the XR session, the XR game may be started in the cloud. The operation of the XR game may require sending one or more data streams containing game content (including video, audio, control, etc.) to the UE. The game server may render the above data streams and provide them to the NW to transmit to the UE. During transmitting the data streams, the NW may use the process 700. That is, the NW may use a prediction model to generate a predicted data block and further generate a differential data block. The NW transmits the differential data block to the UE. The UE may use the same prediction model to generate a locally predicted data block, and recover the original data block in the original data stream based on the received differential data block and the locally predicted data block. The prediction models on both the NW and the UE should be substantially the same. They may be pre-trained and distributed to the NW and the UE. In addition, updates to the prediction models may also be distributed to both the NW and the UE to maintain consistency between the two prediction models at the transmitting end and the receiving end.

### 4. Exemplary Model Training

In an XR scenario, a variety of different types of data streams are transmitted between an NW and a UE, such as video data streams, audio data streams, control data streams, or sensor data streams, etc. It is desirable to improve the prediction performance of the prediction model for data streams. It is also desirable to generate a generalized prediction model for use with various types of data streams. To this end, it is necessary to train the prediction model based on a large amount of data of different types. It is desirable to obtain a suitable model training method and/or model updating method to improve the efficiency of training and improve the accuracy of the trained prediction model. It should be understood that the model training method described herein is merely a preferred embodiment. The model training method may be used in combination with the communication method described herein. However, the communication method described herein does not necessarily rely on the model training method to work.

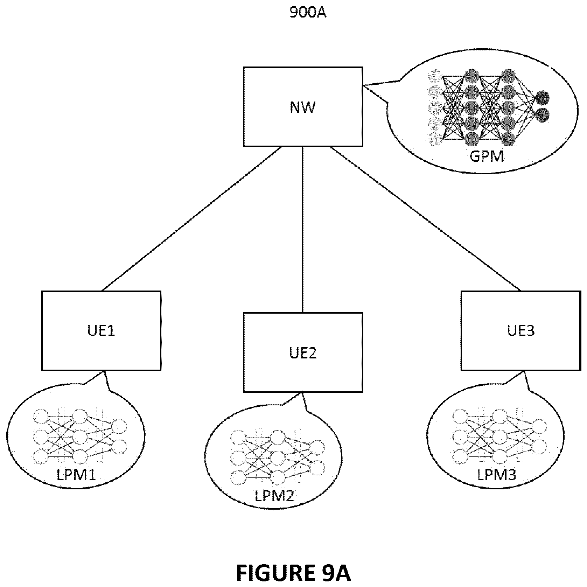

FIG. 9A illustrates a schematic diagram of a training architecture 900A according to an embodiment of the present disclosure. The training architecture 900A may be a distributed training architecture, in which the training of a prediction model is distributed to multiple UEs (shown as UE1, UE2, and UE3). Specifically, a first local prediction model (LPM1) may be trained on UE1, a second local prediction sub-model (LPM2) may be trained on UE2, and a third local prediction model (LPM3) may be trained on UE3. Then, the NW may receive the trained prediction models LPM1, LPM2, and LPM3 from individual UEs. The NW may aggregate the received individual prediction models into a global prediction model (GPM). The NW may distribute the aggregated global prediction model GPM to UE1, UE2, and UE3, for use in predicting data blocks in a data stream. For example, the NW and each UE may use the trained GPM in the above steps 703 and 706. It should be noted that the number of UEs in FIG. 9A is merely illustrative. In other embodiments, more or fewer UEs may be used to train more or fewer local prediction models.

According to an embodiment of the present disclosure, the aggregation of multiple prediction models may be performed in various ways. For example, the parameters describing the multiple prediction models (e.g., the number of layers, weight coefficients, etc.) may be combined to generate a new prediction model, as the aggregated global prediction model. An exemplary combination method is weighted averaging. For another example, the multiple prediction models may be cascaded (e.g., each prediction model is for a respective training layer) to generate the aggregated prediction model that has more layers. If the multiple prediction models are trained for different types of data streams, the multiple prediction models may be combined to obtain a generalized prediction model that may be used for all types of data streams. In other embodiments, other aggregation methods may be used.

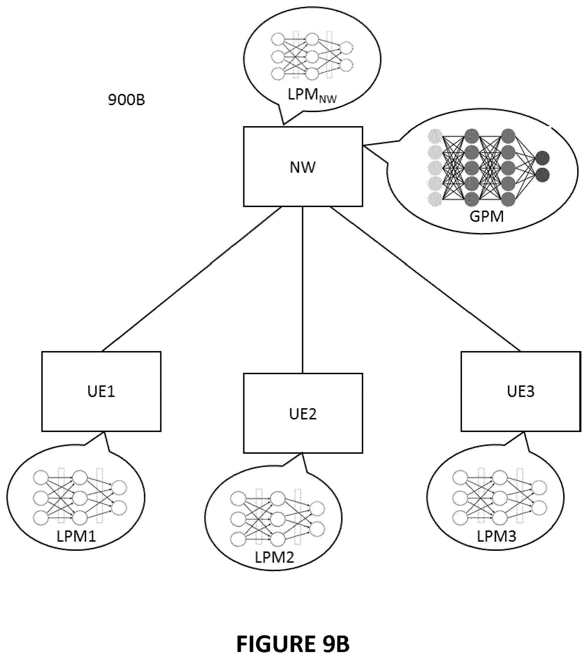

FIG. 9B illustrates a schematic diagram of another training architecture 900B according to an embodiment of the present disclosure. The training architecture 900B may be another distributed training architecture. In this architecture, the training of the prediction model is not only distributed to multiple UEs (shown as UE1, UE2, and UE3), but also distributed locally in the NW. Specifically, the prediction models LPM1, LPM2, and LPM3 may be trained on UE1, UE2, and UE3, respectively, and additionally, a prediction model LPM_{NW} may also be trained locally in the NW. Then, the NW may receive the trained prediction models LPM1, LPM2, and LPM3 from individual UEs. The NW may aggregate the received individual prediction models together with the LPM_{NW} of the NW into a global prediction model GPM, for use by each UE and the NW.

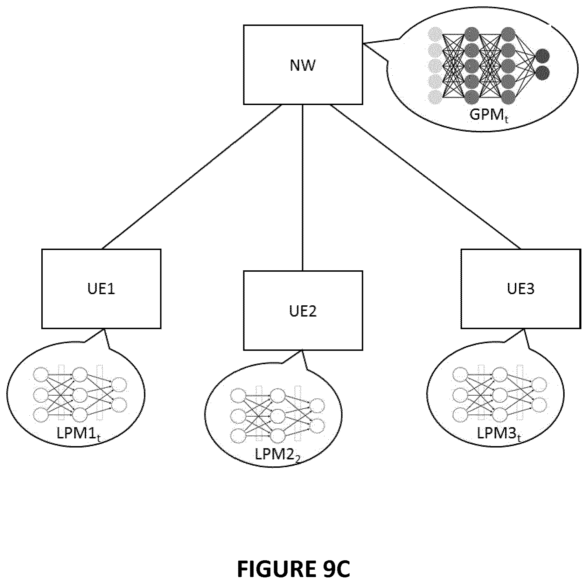

FIG. 9C illustrates a schematic diagram of another training architecture 900C according to an embodiment of the present disclosure. In this training architecture, a federated learning process is used to iteratively perform the distributed training. Similar to FIG. 9A, the training of the prediction model is distributed to multiple UEs (shown as UE1, UE2, and UE3). In the t^{th} iteration, a first local prediction model LPM1ₜ may be trained on UE1, a second local prediction sub-model LPM2t may be trained on UE2, and a third local prediction model LPM3ₜ may be trained on UE3. Then, the NW may receive the trained prediction models LPM1ₜ, LPM2ₜ, and LPM3ₜ from individual UEs. The NW may aggregate the received individual prediction models into a global prediction model GPMt. The NW may distribute the global prediction model GPMₜ to UE1, UE2, and UE3. Each UE may update its corresponding local model (e.g., LPM1ₜ, LPM2ₜ, and LPM3ₜ) based on the received GPMₜ. Then, in the t+1^{th} iteration, UE1, UE2, and UE3 may continue to train the updated local model to obtain new local prediction models, represented as LPMI_{t+1,} LPM2ₜ₊₁, and LPM3ₜ₊₁. Subsequently, the local prediction models LPM1ₜ₊₁, LPM2ₜ₊₁, and LPM3ₜ₊₁ may then be sent to the NW to be aggregated to obtain a new global prediction model GPMt₊₁. After a certain number of iterations, the global prediction model GPM may converge and may be used to predict data blocks in the data stream in the above steps 703 and 706. In an optional embodiment (not shown), the training architecture 900C may further include a prediction model LPM_{NWt} that is trained locally by the NW, which serves as a portion to be aggregated into the global prediction model GPMt.

According to an embodiment of the present disclosure, different data streams among multiple data streams may be assigned to different UEs for training, and individual prediction models trained by different UEs for different data streams may be aggregated into a global prediction model. In this way, the training burden of each UE may be limited, while a generalized prediction model suitable for a variety of types of data streams may be obtained. Different data streams may be identified using stream identifiers. Attributes used to distinguish data streams include at least the data type (video, audio, control, sensor data stream, etc.) in a data stream and the direction (DL or UL directions) of the data stream.

For example, when the XR scenario involves video, audio, and sensor data streams, UE1 may train LPM1 based on a DL video data stream, UE2 may train LPM2 based on a DL audio data stream, and UE3 may train LPM3 based on a DL sensor data stream. Alternatively, UE1 may train LPM1 based on a DL video data stream, UE2 may train LPM2 based on a UL video data stream, and UE3 may train LPM3 based on a DL sensor data stream.

Optionally, each of UE1, UE2, and UE3 may alternatively use multiple different data streams for training. For example, UE1 may use both a DL video data stream and a UL video data stream to train LPM1. In some cases, there exists a correlation between the DL video data stream and the UL video data stream. Therefore, a prediction model that is trained using both the DL video data stream and the UL video data stream may be more accurate than a prediction model that is trained using only one of the DL video data stream or the UL video data stream. For another example, UE1 may use both a DL video data stream and a DL sensor data stream to train LPM1. In some cases, there exists a correlation between the DL video data stream and the DL sensor data stream (for example, between the images and the vibrations in a 4D movie). Therefore, a prediction model that is trained using both the DL video data stream and the DL sensor data stream may be more accurate than a prediction model that is trained using only one of the DL video data stream or the DL sensor data stream.

It should be noted that the above embodiments are merely exemplary, and other combinations of data streams in different directions and/or different types are also possible.

The NW may selectively indicate, based at least on capabilities of the UE, a data stream that each UE should use. For a first UE with high computing capability, the first UE may be indicated to use a data stream with a large size (e.g., a video data stream) to train the prediction model. For a second UE with low computing capability, the second UE may be indicated to use a data stream with a small size (e.g., a text data stream) to train the prediction model. In addition, for a third UE with the highest computing capability, the third UE may be indicated to use multiple data streams with large sizes (e.g., both a DL video data stream and a UL video data stream) to train the prediction model. In this way, the training burden may be reasonably distributed among different UEs to avoid overloading certain UEs, while ensuring training efficiency. In addition, the NW may further selectively indicate a data stream that a UE should use, based on resources allocated to the UE (e.g., communication resources) and channel conditions, etc. For example, for a UE with a poor channel condition, the UE may be instructed to not train on a video data stream, but to train on a control data stream (in text form).

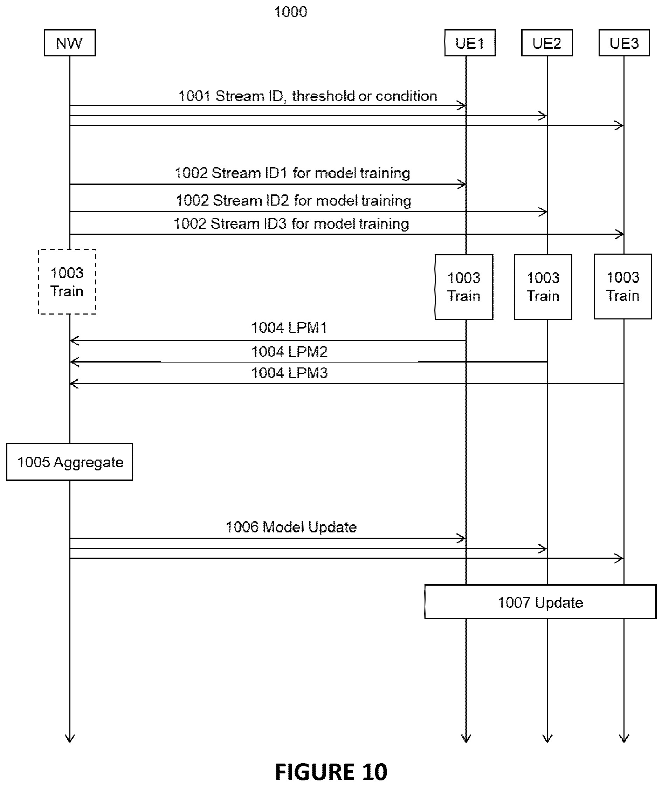

FIG. 10 illustrates a signaling process 1000 for model training according to an embodiment of the present disclosure. In step 1001, the NW may send configuration information to each UE (UE1, UE2, UE3). The configuration information may include multiple stream IDs. Those stream IDs may identify individual data streams that are being transmitted between the NW and the UEs, such as video, audio, control, sensor streams, etc. during an XR game. Additionally, the sent configuration information may include various predetermined thresholds and conditions. Those thresholds and conditions are associated with, for example, the training and use of a prediction model, including but not limited to the various prediction performance conditions or thresholds described above with respect to methods 300 and 400. The configuration information in step 1001 may be sent via a static signaling (e.g., RRC), a semi-static signaling (e.g., MAC CE), or a dynamic signaling (e.g., DCI). Preferably, the configuration information may be sent via RRC.

Then, in step 1002, the NW may send to each UE a particular stream ID for model training performed by the UE. The particular stream ID sent may be selected from the stream IDs included in the configuration information. Different stream IDs may be sent to different UEs to indicate that they perform the training on different streams. For example, stream IDs for UE1, UE2, and UE3 are ID1, ID2, and ID3, respectively. The particular stream ID sent in step 1002 may be sent via a static signaling, a semi-static signaling, or a dynamic signaling. Preferably, the configuration information may be sent via MAC CE or DCI.

Preferably, a particular stream ID sent to a particular UE is selected based on capabilities of the UE. In some embodiments, the NW may determine the capabilities of the UE based on the type of the UE. Optionally or alternatively, the UE may send to the NW a capability indication (not shown) of the UE related to training. The NW may then allocate, based on the capability indication of the particular UE, a respective data stream to match the training capabilities of the UE.

step 1003, each UE may train a local prediction model using one or more corresponding data streams based on the stream IDs received in step 1002. As an example, not a limitation, the prediction model may adopt a convolutional neural network (CNN), a deep neural network (DNN), a recurrent neural network (RNN), a long short-term memory (LSTM), and their variants and enhancement algorithms without limitation. Optionally, the NW may also train a prediction model locally, and this step is shown with a dashed box.

In step 1004, each UE may send the prediction model trained in step 1003 to the NW. In step 1005, the NW may aggregate individual prediction models received in step 1004 (and, optionally, the model trained locally by the NW) to generate a global prediction model.

In step 1006, the NW may send a model update that is obtained based on the global prediction model generated in step 1005 to each UE. In some embodiments, the NW may send the entire global prediction model (e.g., values of all model parameters) to each UE. This process may be conducted by broadcasting. In a preferred embodiment, instead of sending the entire global prediction model, the NW may only send a differential model or features of the differential model to the UE.

The differential model may generally be defined as a difference between the global prediction model and the local prediction model. The differential model is calculated per UE. For example, the differential model DPM1 of UE1 = the global prediction model (GPM) - the local prediction model (LPM1) of UE1; the differential model (DPM2) of UE2 = the global prediction model (GPM) - the local prediction model (LPM2) of UE2, and so on. In a specific embodiment in which iterations are used to train the prediction model, the differential model may be defined as a difference between the global prediction model in the current iteration and the differential model in the previous iteration. For example, for UE1, it may be defined that DPM1ₜ= GPMₜ- DPM1ₜ₋₁. Such a definition is advantageous in some scenarios. For example, when the differential model DPM1ₜ₋₁ sent in the previous iteration is large, sending DPM1ₜ(=GPMₜ-DPM1ₜ₋₁) may be able to reduce the communication burden of the communication link in the current iteration. Because, when the differential model DPM1ₜ₋₁ sent in the previous iteration is small (that is, the two models are already close), the difference between the global prediction model of the next iteration and the differential model of the previous iteration will instead be large. The NW may adopt two definitions of the differential model and send an indication to the UE to indicate which differential model is adopted. Based on the received indication, the UE may choose a respective method to recover the complete model based on the differential model.

Various metrics may be used to describe the differential model. Exemplary metrics may include one or more of gradient, weight, divergence, distance, eigenvalue, etc. The value of each metric characterizing the differential model may be a difference between two numerical values, or a distance metric or a similarity metric between two parameters (such as Euclidean distance, KL divergence, normalized value, etc.). Preferably, features of the differential model may be used to represent the differential model to further reduce the amount of data. The features of the differential model may be represented by compression or enhancement of the differential model, including but not limited to distribution, eigenvalue and pruned differential model, top-k weight of the differential model, weight of the differential model that is above a certain threshold, certain layers of the differential model, and so on. Sending of the differential model or its features may be performed separately to each UE via unicast. Transmitting the differential model has the following advantages: (a) it can reduce sending of known/repeated knowledge, saving the amount of sent data, and reducing burden on communication links; (b) it can protect privacy, because the differential model does not contain a complete model of each UE. Therefore, even if an eavesdropper detects the differential model being sent to the UE, it cannot obtain the complete model of the UE.

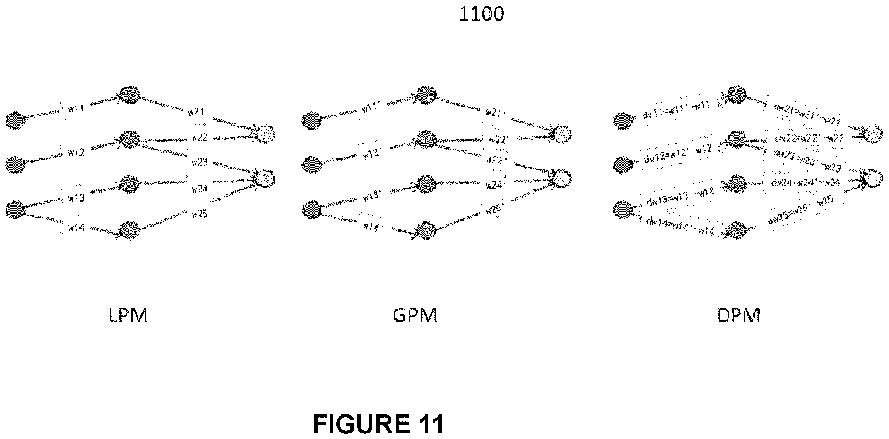

FIG. 11 illustrates a schematic diagram 1100 for computing a differential model according to an embodiment of the present disclosure. In FIG. 11, the local prediction model LPM is represented as a plurality of nodes, which are organized into a plurality of layers, and there are one or more edges between the nodes, each edge being associated with a respective weight coefficient ***w*.** For example, the weight coefficient ***w*** may represent the weight of the edge in the model LPM. The global prediction model GPM may also be represented similarly, but with a different weight coefficient ***w*'.** The difference ***dw*** between the weight coefficients ***w*'** and ***w*** (i.e., ***dw =w'-w*)** may be used to characterize the differential model DPM between the local prediction model LPM and the global prediction model GPM.

In some embodiments, the differential model may be sent to a UE by sending a set of ***dw.*** The UE may superimpose the set of ***dw*** on the weight coefficients of individual edges of the local prediction model LPM, thereby recovering the global prediction model GPM.

In other embodiments, the differential model may be sent to the UE by sending a representation of the set of ***dw.*** It is possible to use the following as the representation of ***dw*** (1) a distribution or interleaving sequence of ***dw;*** or (2) eigenvalues of a matrix that is composed of ***dw.*** This may further reduce the amount of transmitted data. As an example, not a limitation, the distribution of ***dw*** may be acquired by the following method: representing all weight coefficients of the differential model in a coordinate system in a natural order (index, weight); rearranging the represented weight coefficients through an interleaving sequence (this adjusts the order of the weight coefficients, making curve fitting easier); after obtaining the fitting curve, using one or more distributions to characterize the fitting curve. Then, parameters of the one or more distributions and the interleaving sequence (if used) may be sent to the UE. By sending the parameters of the one or more distributions and the used interleaving sequence instead of all weight coefficients of the differential model, the communication overhead may be further reduced. The UE may generate a differential model based on the received distribution, performs a deinterleaving operation according to the received interleaving sequence, and then superimposes it on the local prediction model, thereby obtaining a recovered global prediction model. The recovered global prediction model may be used as the updated global prediction model.

It should be understood that what is shown in FIG. 11 is only an exemplary embodiment. In other embodiments, the differential model may be represented by other means. For example, the process of FIG. 11 uses all the weight coefficients of the differential model to characterize the differential model, while in an alternative embodiment, the differential model may also be characterized based on only a portion of the weight coefficients. This portion of weight coefficients may include, for example, part of the weight coefficients that are obtained after pruning the model, or top-k weight coefficients of the model, or weight coefficients of the model that are above a certain threshold, or weight coefficients of certain layers of the model, etc. The differential model may be characterized by using any other appropriate means.

Returning to FIG. 10, in step 1007, the UE may update the local model based on the data received in step 1006. For example, when the differential model is received, the UE may recover the updated global prediction model based on the differential model, as described above.

For a training architecture that uses a federated learning process (e.g., as in FIG. 9C), steps 1003-1007 may be performed in each of multiple iterations. In order to save communication overhead and improve confidentiality, it may be preferred to transmit the differential model in step 1006 instead of the entire global prediction model.

### 5. Overlapping of Data Transmission and Model Training

In some scenarios, data transmission based on a prediction model and training of the prediction model may overlap in time. For example, a training architecture using a federated learning process may require multiple iterations, and the multiple iterations will cause an increase in latency. In order to meet the low-latency communication needs of some users, a design of training-while-communicating may be used. That is, the UE may participate in model training and, at the same time, use the currently trained model to predict data blocks in a data stream (for example, to perform the process 700). In this case, for multiple UEs participating in the distributed training of the same global prediction model, different operations may be caused based on different training results.

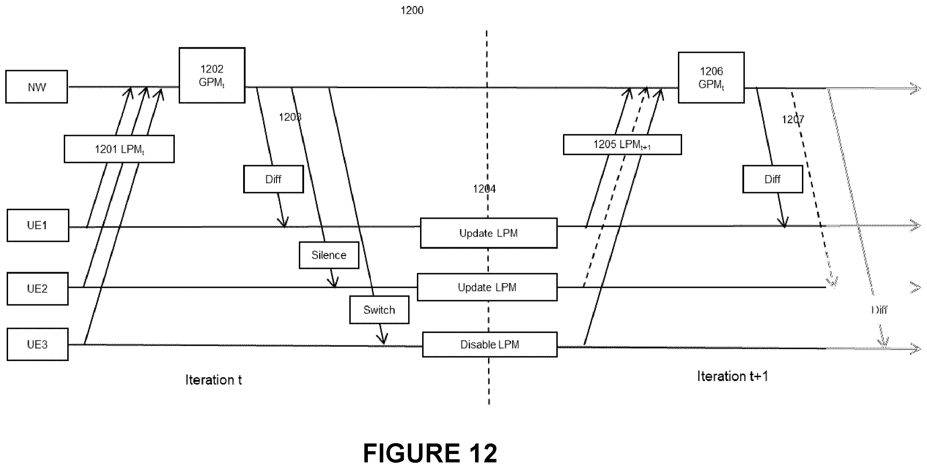

FIG. 12 illustrates a schematic diagram of a training process 1200 according to an embodiment of the present disclosure. In step 1201, individual UE1, UE2, and UE3 send to the NW LPM1ₜ, LPM2t and LPM3t that are obtained in the t^{th} iteration. Then, the NW generates a global prediction model GPMₜ associated with the t^{th} iteration by aggregating LPM1ₜ, LPM2ₜ and LPM3ₜ in step 1202.

Next, in step 1203, the NW may send different instructions to different UEs based on the prediction performance of the generated GPMₜ with respect to UE1, UE2, and UE3. Various possible situations will be described in detail below.

When GPMₜ is applied to a current data stream to be transmitted of a particular UE (e.g., UE2) and the resulting prediction performance is good enough, the GPMₜ may have converged for the UE and may be available for use. At this time, in step 1203, in addition to sending the differential model DPM2t to UE2, the NW may also send a silence indication to UE2. UE2 may update the local prediction model LPM2t based on the received differential model DPM2ₜ in step 1204. Additionally, in response to receiving the silence indication, model training on UE2 may be terminated. In the t+1 ^{th} iteration, UE2 may no longer generate or send LPM2ₜ₊₁ in step 1205 (shown as a dashed arrow). Moreover, in the t+1^{th} iteration (and subsequent iterations), UE2 no longer receives the differential model DPM2ₜ₊₁ (shown as a dashed arrow) from the NW, or UE2 no longer updates the local prediction model LPM2ₜ₊₁ based on the differential model DPM2ₜ₊₁. UE2 may continue to use the prediction model GPMₜ to perform communication (for example, using the communication method based on a prediction model, of the process 700).

When GPMₜ is applied to a current data stream to be transmitted of a particular UE (e.g., UE3) and the resulting prediction performance is sufficiently poor (e.g., lower than the above fourth predetermined performance condition), the GPMₜ should not be used to predict data blocks associated with the UE. At this time, in step 1203, in addition to sending the differential model DPM3t to UE3, the NW may send a switching indication to UE3. UE3 may update the local prediction model LPM3t based on the received differential model DPM3ₜ in step 1204. Additionally, in response to receiving the switching indication, UE3 may disable GPMₜ for prediction in step 1204. For example, UE3 stops the process 700 of using the prediction model GPM, but instead uses the conventional process 500. In order to provide refinement to the global prediction model GPMₜ, model training on UE3 should continue. Therefore, in the t+1^{th} iteration, UE3 may send the locally trained LPM3ₜ₊₁ to the NW in step 1205.

When GPMₜ is applied to a current data stream to be transmitted of a particular UE (e.g., UE1) and the resulting prediction performance is between the above two cases, model training on the UE continues, and the GPMₜ may be available to predict data blocks of UE1. At this time, in step 1203, the NW may send the differential model DPM1ₜ to the UE1, without sending the silent indication or the switching indication. Accordingly, UE1 uses the differential model to update the local prediction model in step 1204, and uses the local prediction model to make predictions (i.e., to perform the process 700). Additionally, model training on the UE should continue to provide refinement to the global prediction model GPM. Therefore, in the t+1^{th} iteration, UE1 may send the locally trained LPM1ₜ₊₁ in step 1205.

In step 1206, the NW updates GPMₜ based on the received LPM3ₜ₊₁ and LPM1ₜ₊₁ to obtain GPMₜ₊₁. LPM2ₜ₊₁ is not sent or used, so that a portion of GPMₜ₊₁ that was affected by LPM2ₜ₊₁ remains unchanged relative to GPMt.

In step 1207, due to the effect of LPM3ₜ₊₁, GPMₜ₊₁ is improved, so that the prediction performance of applying GPMₜ₊₁ to UE3 may be improved. The global prediction model GPM may be continuously improved in iterations. Until in the t+M^{th} iteration, the prediction performance of applying GPM_{t+M} to UE3 is good enough (for example, higher than the fourth predetermined performance condition). At this time, the NW may send a recovery indication to UE3 to re-enable the global prediction model for performing the process 700 on UE3.

Various indicators may be used to measure the prediction performance of applying GPMt to a particular UE. In some embodiments, the prediction performance of GPMₜ may be evaluated based on the size of a differential data block (e.g., DPF2 obtained in step 340) that is obtained by applying GPMt to a particular UE. The larger the differential data block, the worse the prediction performance of GPMt. In other embodiments, the prediction performance of GPMₜ may be evaluated based on characteristics of the differential model between GPMₜ and a local prediction model of the UE. Available characteristics of the differential model include but are not limited to the sparsity of the model, the contribution rate to the model update, the weight difference, the divergence value, the distance value, the normalized value, etc. For example, the characteristics of the differential model show that the closer GPMₜ is to the local prediction model of the UE, the closer GPMₜ is to convergence, accordingly, the better the prediction performance of GPMt. Compared with use of the size of the differential data block, it is simpler to use the characteristics of the differential model to determine the performance of GPMₜ, because it does not require GPMₜ to actually conduct predictions.

According to an embodiment of the present disclosure, the NW may determine, based on an absolute indicator or a relative indicator of GPMₜ, whether to send a silence indication or a switching indication to a particular UE. For example, for each UE, if the prediction performance obtained by applying GPMₜ to the UE is higher than a first predetermined threshold, the NW may send the silence indication to the UE. If the prediction performance obtained by applying GPMₜ to the UE is lower than a second predetermined threshold, the NW may send the switching indication to the UE. For another example, the NW may send the silence indication to a number (K) of UEs with the highest performance among all UEs. Additionally or alternatively, the NW may send the switching indication to a number of (Q) UEs with the lowest performance among all UEs. Absolute indicators or relative indicators may be used in combination without limitation.

Optionally, in step 1203, the NW not only sends the differential model and the silence indication/switching indication, but also sends data blocks in the data stream (e.g., data blocks in a video data stream). For UE2, the performance of GPMₜ is good enough, so the data block sent may be a differential data block that is generated using the communication method based on the prediction model GPMt (e.g., the process 700). For UE3, the performance of GPMₜ is too poor, so the data block sent is not a differential data block generated using the communication method based on the prediction model GPMt (e.g., the process 700), but a data block generated by other means (e.g., the conventional process 500). For UE1, the performance of GPMₜ is ordinary, so the data block sent may be a differential data block generated using the communication method based on the prediction model GPMt (e.g., the process 700), or a data block generated by other means (e.g., the conventional process 500). In some embodiments, the data block sent may be sent together with the differential model and the silence indication/switching indication. In some embodiments, the data block sent may be sent separately from the differential model and the silence indication/switching indication.

### 6. Other Scenarios

Although various embodiments are described above mainly with respect to a communication system including an NW and a UE, the principles of the present disclosure may also be applied to any other system involving communication of data streams.

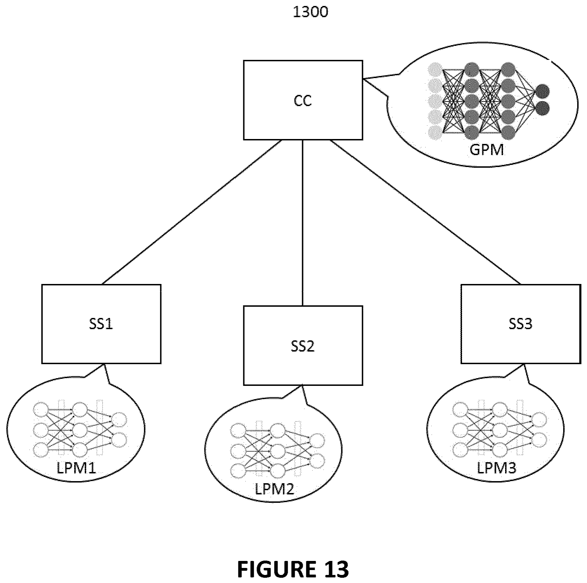

FIG. 13 illustrates a schematic diagram of an Internet of Things (IoT) communication system 1300 according to an embodiment of the present disclosure. Compared with the architecture in FIG. 9A, a control-side device (CC) (e.g., a central controller or a server) and a sensor (SS) are used in replace of the NW and UE in FIG. 9A, respectively. A plurality of sensor devices (SS1, SS2, SS3) each collect data and communicate with the control-side device CC. Each sensor SS is similar to the UE described above, and the control-side device CC is similar to the NW described above. The communication method and training method described in the present disclosure may be similarly applied to this system. In particular, the data collected by the sensor SS and the control/interaction data sent by the control-side device CC all have the characteristics of being relatively stable and having a small amount. Therefore, once a global prediction model that meets the prediction accuracy is obtained, the prediction model will not easily decline or degrade. That is, the demand for model updating is low. The prediction model may remain stable for a long period of time. Moreover, the prediction model may support prediction of a large number of data blocks at one time. In such scenario, the process 700 may greatly alleviate the problem of communication resource consumption and communication latency.

### 7. Application Examples

The technology of the present disclosure can be applied to various products.

For example, a control-side electronic device according to an embodiment of the present disclosure may be implemented as or included in various control devices/base stations. For example, a transmitting device and a terminal device according to an embodiment of the present disclosure may be implemented as or included in various terminal devices.

For example, the control device/base station mentioned in the present disclosure may be implemented as any type of base station, for example eNB, such as macro eNB and small eNB. A small eNB may be an eNB that covers a cell smaller than a macro cell, such as a pico eNB, a micro eNB, and a home (femto) eNB. For another example, it may be implemented as a gNB, such as a macro gNB and a small gNB. A small gNB may be a gNB covering a cell smaller than a macro cell, such as a pico gNB, a micro gNB, and a home (femto) gNB. Alternatively, the base station may be implemented as any other type of base station, such as NodeB and Base Transceiver Station (BTS). The base station may include: a main body (also referred to as a base station device) configured to control radio communication; and one or more Remote Radio Heads (RRHs) disposed at a different location from the main body. In addition, various types of terminals to be described below may each operate as a base station by performing base station functions temporarily or semi-persistently. For example, the terminal devices mentioned in the present disclosure may be implemented as mobile terminals (such as smart phones, tablet personal computers (PCs), notebook PCs, portable game terminals, portable/dongle-type mobile routers and digital cameras) or vehicle-mounted terminals (such as vehicle navigation devices) in some embodiments. The terminal device may also be implemented as a terminal performing machine-to-machine (M2M) communication (also referred to as a machine type communication (MTC) terminal). In addition, the terminal device may be a radio communication module (such as an integrated circuit module including a single wafer) mounted on each of the above terminals.

Application examples according to the present disclosure will be described below with reference to the drawings.

### [Example for Base Stations]

It should be understood that the term base station in the present disclosure has the full breadth of its ordinary meaning, and includes at least a radio communication station used as portion of a wireless communication system or radio system to facilitate communication. Examples of the base station may be, for example but not limited to, the following: the base station may be either or both of a base transceiver station (BTS) and a base station controller (BSC) in the GSM system, and may be either or both of a radio network controller (RNC) or Node B in the WCDMA system, may be eNB in the LTE and LTE-Advanced system, or may be corresponding network nodes in future communication systems (e.g., the gNB that may appear in the 5G communication systems, eLTE eNB, etc.). Some of the functions in the base station of the present disclosure may also be implemented as an entity having a control function for communication in the scenario of a D2D, M2M, V2V and V2X communication, or as an entity that plays a spectrum coordination role in the scenario of a cognitive radio communication.

### First Example

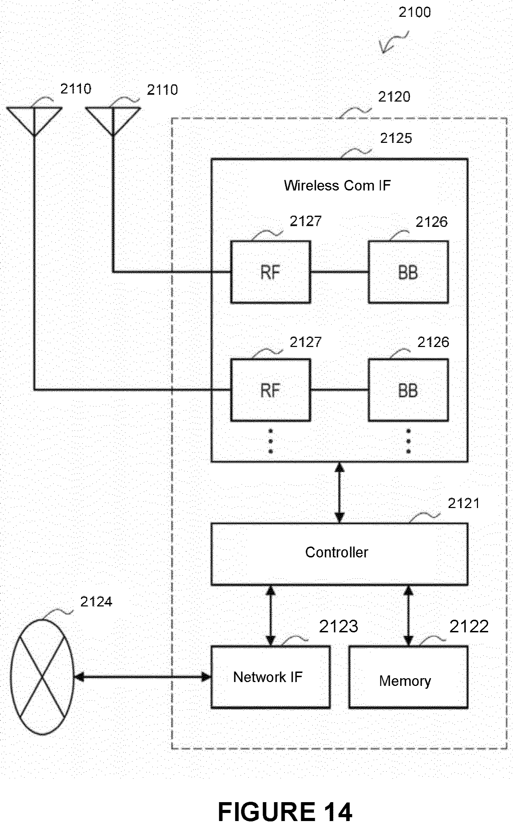

FIG. 14 is a block diagram showing a first example of a schematic configuration of a gNB to which the technology of the present disclosure may be applied. The gNB 2100 includes multiple antennas 2110 and a base station device 2120. The base station device 2120 and each antenna 2110 may be connected to each other via an RF cable. In one implementation, the gNB 2100 (or the base station device 2120) here may correspond to the above electronic device on the control side.

Each of the antennas 2110 includes a single or multiple antenna elements (such as multiple antenna elements included in a Multiple Input Multiple Output (MIMO) antenna), and is used for the base station device 2120 to send and receive wireless signals. As shown in FIG. 14, gNB 2100 may include multiple antennas 2110. For example, multiple antennas 2110 may be compatible with multiple frequency bands used by gNB 2100.

The base station device 2120 includes a controller 2121, a memory 2122, a network interface 2123 and a wireless communication interface 2125.

The controller 2121 may be, for example, a CPU or a DSP, and operates various functions of a higher layers of the base station device 2120. For example, the controller 2121 determines location information of a target terminal device in the at least one terminal devices according to the positioning information of at least one terminal device on the terminal side in the wireless communication system and a particular location configuration information of the at least one terminal device acquired by the wireless communication interface 2125. The controller 2121 may have a logical function to perform control such as radio resource control, radio bearer control, mobility management, access control and scheduling. This control may be performed in conjunction with nearby gNBs or core network nodes. The memory 2122 includes RAM and ROM, and stores programs executed by the controller 2121 and various types of control data (such as a terminal list, transmission power data, and scheduling data).

The network interface 2123 is a communication interface for connecting the base station device 2120 to the core network 2124. The controller 2121 may communicate with the core network node or another gNB via the network interface 2123. In this case, the gNB 2100 and the core network node or other gNB may be connected to each other through logical interfaces such as S1 interface and X2 interface. The network interface 2123 may also be a wired communication interface or a wireless communication interface for wireless backhaul. If the network interface 2123 is a wireless communication interface, the network interface 2123 may use a higher frequency band for wireless communication than the frequency band used by the wireless communication interface 2125.

The wireless communication interface 2125 supports any cellular communication scheme such as Long Term Evolution (LTE) and LTE-Advanced, and provides a wireless connection to terminals located in a cell of the gNB 2100 via the antenna 2110. The wireless communication interface 2125 may generally include, for example, a baseband (BB) processor 2126 and an RF circuit 2127. The BB processor 2126 may perform, for example, encoding/decoding, modulation/demodulation, and multiplexing/demultiplexing, and perform various types of signal processing for layers (such as L1, Medium Access Control (MAC), Radio Link Control (RLC), and Packet Data Convergence Protocol (PDCP)). Instead of the controller 2121, the BB processor 2126 may have a part or all of the logic functions described above. The BB processor 2126 may be a memory storing a communication control program, or a module including a processor configured to execute a program and related circuits. The update program may cause the function of the BB processor 2126 to change. The module may be a card or a blade inserted into a slot of the base station device 2120. Alternatively, the module may also be a chip mounted on a card or blade. Meanwhile, the RF circuit 2127 may include, for example, a mixer, a filter, and an amplifier, and transmit and receive wireless signals via the antenna 2110. Although FIG. 14 illustrates an example in which one RF circuit 2127 is connected to one antenna 2110, the present disclosure is not limited to this illustration, instead one RF circuit 2127 may be connected to multiple antennas 2110 at the same time.

As shown in FIG. 14, the wireless communication interface 2125 may include multiple BB processors 2126. For example, multiple BB processors 2126 may be compatible with multiple frequency bands used by gNB 2100. As shown in FIG. 14, the wireless communication interface 2125 may include multiple RF circuits 2127. For example, the multiple RF circuits 2127 may be compatible with multiple antenna elements. Although FIG. 14 illustrates an example in which the wireless communication interface 2125 includes multiple BB processors 2126 and multiple RF circuits 2127, the wireless communication interface 2125 may also include a single BB processor 2126 or a single RF circuit 2127.

### Second Example

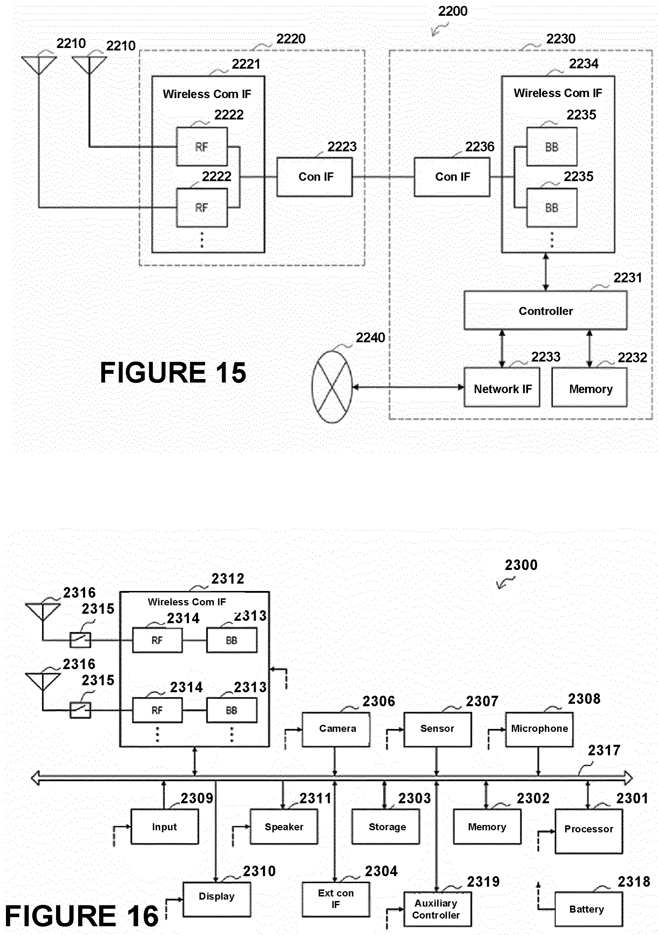

FIG. 15 is a block diagram showing a second example of a schematic configuration of a gNB to which the technology of the present disclosure may be applied. The gNB 2200 includes multiple antennas 2210, RRH 2220 and base station device 2230. The RRH 2220 and each antenna 2210 may be connected to each other via an RF cable. The base station device 2230 and the RRH 2220 may be connected to each other via a high-speed line such as an optical fiber cable. In one implementation, the gNB 2200 (or the base station device 2230) here may correspond to the above electronic device on the control side.

Each of the antennas 2210 includes a single or multiple antenna elements (such as multiple antenna elements included in a MIMO antenna), and is used for the RRH 2220 to send and receive wireless signals. As shown in FIG. 15, the gNB 2200 may include multiple antennas 2210. For example, the multiple antennas 2210 may be compatible with multiple frequency bands used by the gNB 2200.

The base station device 2230 includes a controller 2231, a memory 2232, a network interface 2233, a wireless communication interface 2234 and a connection interface 2236. The controller 2231, the memory 2232, and the network interface 2233 are the same as the controller 2121, the memory 2122, and the network interface 2123 described with reference to FIG. 14.

The wireless communication interface 2234 supports any cellular communication scheme (such as LTE and LTE-Advanced), and provides wireless communication to terminals located in a sector corresponding to the RRH 2220 via the RRH 2220 and the antenna 2210. The wireless communication interface 2234 may generally include, for example, a BB processor 2235. The BB processor 2235 is the same as the BB processor 2126 described with reference to FIG. 14 except that the BB processor 2235 is connected to the RF circuit 2222 of the RRH 2220 via the connection interface 2236. As shown in FIG. 15, the wireless communication interface 2234 may include multiple BB processors 2235. For example, the multiple BB processors 2235 may be compatible with multiple frequency bands used by the gNB 2200. Although FIG. 15 illustrates an example in which the wireless communication interface 2234 includes multiple BB processors 2235, the wireless communication interface 2234 may also include a single BB processor 2235.

The connection interface 2236 is an interface for connecting the base station device 2230 (wireless communication interface 2234) to the RRH 2220. The connection interface 2236 may also be a communication module for communication in the above high-speed line connecting the base station device 2230 (wireless communication interface 2234) to the RRH 2220.

The RRH 2220 includes a connection interface 2223 and a wireless communication interface 2221.

The connection interface 2223 is an interface for connecting the RRH 2220 (wireless communication interface 2221) to the base station device 2230. The connection interface 2223 may also be a communication module used for communication in the above high-speed line.

The wireless communication interface 2221 transmits and receives wireless signals via the antenna 2210. Wireless communication interface 2221 may generally include RF circuitry 2222, for example. The RF circuit 2222 may include, for example, a mixer, a filter, and an amplifier, and transmits and receives wireless signals via the antenna 2210. Although FIG. 15 shows an example in which one RF circuit 2222 is connected to one antenna 2210, the present disclosure is not limited to this illustration, instead one RF circuit 2222 may be connected to multiple antennas 2210 at the same time.

As shown in FIG. 15, the wireless communication interface 2221 may include multiple RF circuits 2222. For example, the multiple RF circuits 2222 may support multiple antenna elements. Although FIG. 15 illustrates an example in which the wireless communication interface 2221 includes multiple RF circuits 2222, the wireless communication interface 2221 may also include a single RF circuit 2222.

### [Examples of User Device/Terminal Device]

### First Example

FIG. 16 is a block diagram showing an example of a schematic configuration of a communication device 2300 (e.g., a smart phone, a communicator, etc.) to which the techniques of the present disclosure may be applied. The communication device 2300 includes a processor 2301, a memory 2302, a storage apparatus 2303, an external connection interface 2304, a camera apparatus 2306, a sensor 2307, a microphone 2308, an input apparatus 2309, a display apparatus 2310, a speaker 2311, a wireless communication interface 2312, one or more antenna switches 2315, one or more antennas 2316, a bus 2317, a battery 2318, and an auxiliary controller 2319. In one implementation, the communication device 2300 (or the processor 2301) here may correspond to the above transmitting device or electronic device on the terminal side.

The processor 2301 may be, for example, a CPU or a system on chip (SoC), and controls functions of an application layer and other layers of the communication device 2300. The memory 2302 includes RAM and ROM, and stores data and programs executed by the processor 2301. The storage apparatus 2303 may include a storage medium such as a semiconductor memory and a hard disk. The external connection interface 2304 is an interface for connecting an external apparatus (such as a memory card and a universal serial bus (USB) apparatus) to the communication device 2300.

The camera apparatus 2306 includes an image sensor (such as a charge coupled device (CCD) and a complementary metal oxide semiconductor (CMOS)), and generates a captured image. Sensors 2307 may include a set of sensors such as measurement sensors, gyro sensors, geomagnetic sensors, and acceleration sensors. The microphone 2308 converts sound input to the communication device 2300 into an audio signal. The input apparatus 2309 includes, for example, a touch sensor configured to detect a touch on the screen of the display apparatus 2310, a keypad, a keyboard, buttons, or switches, and receives operations or information input from a user. The display apparatus 2310 includes a screen (such as a Liquid Crystal Display (LCD) and an Organic Light Emitting Diode (OLED) display), and displays an image output by the communication device 2300. The speaker 2311 converts an audio signal output from the communication device 2300 into sound.

The wireless communication interface 2312 supports any cellular communication scheme (such as LTE and LTE-Advanced), and performs wireless communication. The wireless communication interface 2312 may generally include, for example, a BB processor 2313 and an RF circuit 2314. The BB processor 2313 may perform, for example, encoding/decoding, modulation/demodulation, and multiplexing/demultiplexing, and perform various types of signal processing for wireless communication. Meanwhile, the RF circuit 2314 may include, for example, a mixer, a filter, and an amplifier, and transmit and receive wireless signals via the antenna 2316. The wireless communication interface 2312 may be a chip module on which a BB processor 2313 and an RF circuit 2314 are integrated. As shown in FIG. 16, the wireless communication interface 2312 may include multiple BB processors 2313 and multiple RF circuits 2314. Although FIG. 16 shows an example in which the wireless communication interface 2312 includes multiple BB processors 2313 and multiple RF circuits 2314, the wireless communication interface 2312 may also include a single BB processor 2313 or a single RF circuit 2314.

In addition, the wireless communication interface 2312 may support another type of wireless communication scheme, such as a short-range wireless communication scheme, a near field communication scheme, and a wireless local area network (LAN) scheme, in addition to the cellular communication scheme. In this case, the wireless communication interface 2312 may include a BB processor 2313 and an RF circuit 2314 for each wireless communication scheme.

Each of the antenna switches 2315 switches the connection destination of the antenna 2316 among multiple circuits included in the wireless communication interface 2312 (e.g., circuits for different wireless communication schemes).

Each of the antennas 2316 includes a single or multiple antenna elements (such as multiple antenna elements included in a MIMO antenna), and is used for the wireless communication interface 2312 to transmit and receive wireless signals. As shown in FIG. 16, the communication device 2300 may include multiple antennas 2316. Although FIG. 16 illustrates an example in which the communication device 2300 includes multiple antennas 2316, the communication device 2300 may also include a single antenna 2316.

In addition, the communication device 2300 may include an antenna 2316 for each wireless communication scheme. In this case, the antenna switch 2315 may be omitted from the configuration of the communication device 2300.

The bus 2317 connects the processor 2301, memory 2302, storage apparatus 2303, external connection interface 2304, camera apparatus 2306, sensor 2307, microphone 2308, input apparatus 2309, display apparatus 2310, speaker 2311, wireless communication interface 2312, and auxiliary controller 2319 to each other. The battery 2318 provides power to the various blocks of the communication device 2300 shown in FIG. 16 via feed lines, which are partially shown as dashed lines in the figure. The auxiliary controller 2319 operates the minimum necessary functions of the communication device 2300 in sleep mode, for example.

### Second Example

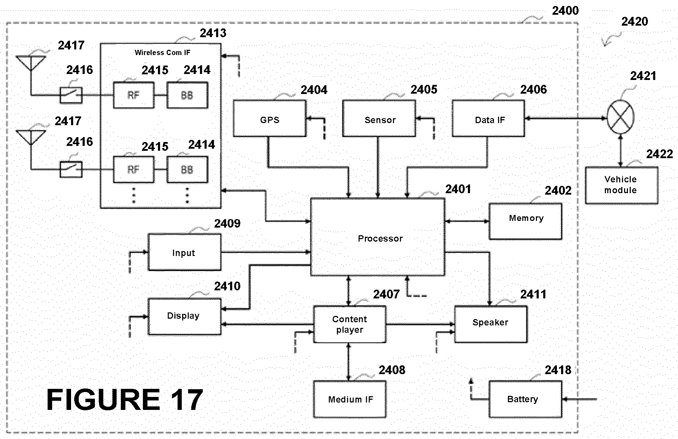

FIG. 17 is a block diagram showing an example of a schematic configuration of a vehicle navigation device 2400 to which the technology of the present disclosure may be applied. The vehicle navigation device 2400 includes a processor 2401, a memory 2402, a global positioning system (GPS) module 2404, a sensor 2405, a data interface 2406, a content player 2407, a storage medium interface 2408, an input apparatus 2409, a display apparatus 2510, a speaker 2411, a wireless communication interface 2413, one or more antenna switches 2416, one or more antennas 2417, and a battery 2418. In one implementation, the vehicle navigation device 2400 (or the processor 2401) here may correspond to a transmitting device or a terminal-side electronic device.

The processor 2401 may be, for example, a CPU or a SoC, and controls the navigation function and other functions of the vehicle navigation device 2400. The memory 2402 includes RAM and ROM, and stores data and programs executed by the processor 2401.

The GPS module 2404 measures the location (such as latitude, longitude, and altitude) of the vehicle navigation device 2400 using GPS signals received from GPS satellites. The sensors 2405 may include a set of sensors such as gyroscopic sensors, geomagnetic sensors, and air pressure sensors. The data interface 2406 is connected to, for example, the in-vehicle network 2421 via a terminal not shown, and acquires data generated by the vehicle (such as vehicle speed data).

The content player 2407 reproduces content stored in a storage medium (such as CD and DVD), which is inserted into the storage medium interface 2408. The input apparatus 2409 includes, for example, a touch sensor configured to detect a touch on the screen of the display apparatus 2510, a button, or a switch, and receives an operation or information input from a user. The display apparatus 2510 includes a screen such as an LCD or OLED display, and displays an image of a navigation function or reproduced content. The speaker 2411 outputs sound of a navigation function or reproduced content.

The wireless communication interface 2413 supports any cellular communication scheme such as LTE and LTE-Advanced, and performs wireless communication. The wireless communication interface 2413 may generally include, for example, a BB processor 2414 and an RF circuit 2415. The BB processor 2414 may perform, for example, encoding/decoding, modulation/demodulation, and multiplexing/demultiplexing, and perform various types of signal processing for wireless communication. Meanwhile, the RF circuit 2415 may include, for example, a mixer, a filter, and an amplifier, and transmit and receive wireless signals via the antenna 2417. The wireless communication interface 2413 may also be a chip module on which the BB processor 2414 and the RF circuit 2415 are integrated. As shown in FIG. 17, the wireless communication interface 2413 may include multiple BB processors 2414 and multiple RF circuits 2415. Although FIG. 17 illustrates an example in which the wireless communication interface 2413 includes multiple BB processors 2414 and multiple RF circuits 2415, the wireless communication interface 2413 may also include a single BB processor 2414 or a single RF circuit 2415.

In addition, the wireless communication interface 2413 may support another type of wireless communication scheme, such as a short-distance wireless communication scheme, a near field communication scheme, and a wireless LAN scheme, in addition to the cellular communication scheme. In this case, the wireless communication interface 2413 may include a BB processor 2414 and an RF circuit 2415 for each wireless communication scheme.

Each of the antenna switches 2416 switches the connection destination of the antenna 2417 among multiple circuits included in the wireless communication interface 2413 (such as circuits for different wireless communication schemes).

Each of the antennas 2417 includes a single or multiple antenna elements (such as multiple antenna elements included in a MIMO antenna), and is used for the wireless communication interface 2413 to transmit and receive wireless signals. As shown in FIG. 17, the vehicle navigation device 2400 may include multiple antennas 2417. Although FIG. 17 illustrates an example in which the vehicle navigation device 2400 includes multiple antennas 2417, the vehicle navigation device 2400 may also include a single antenna 2417.

In addition, the vehicle navigation device 2400 may include an antenna 2417 for each wireless communication scheme. In this case, the antenna switch 2416 may be omitted from the configuration of the vehicle navigation device 2400.

The battery 2418 provides power to various blocks of the vehicle navigation device 2400 shown in FIG. 17 via feeder lines, which are partially shown as dotted lines in the figure. The battery 2418 accumulates electric power supplied from the vehicle.

The technology of the present disclosure may also be implemented as an in-vehicle system (or vehicle) 2420 including one or more blocks in a vehicle navigation device 2400, an in-vehicle network 2421, and a vehicle module 2422. The vehicle module 2422 generates vehicle data (such as vehicle speed, engine speed, and breakdown information), and outputs the generated data to the in-vehicle network 2421.

The exemplary embodiments of the present disclosure are described above with reference to the accompanying drawings, but the present disclosure is of course not limited to the above examples. A person skilled in the art may find various alterations and modifications within the scope of the appended claims, and it should be understood that they will naturally come under the technical scope of the present disclosure.

It should be understood that the machine-readable storage medium or the machine-executable instructions in the program product according to the embodiments of the present disclosure may be configured to perform operations corresponding to the above device and method embodiments. When referring to the above device and method embodiments, the embodiments of the machine-readable storage medium or the program product will be obvious to those skilled in the art, so the description will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

In addition, it should be understood that the series of processes and devices described above may also be implemented by software and/or firmware. In the case of implemented by software and/or firmware, respective programs constituting the respective software are stored in the storage medium of the related device, and various functions may be performed when the programs are executed.

For example, multiple functions included in one unit in the above embodiments may be implemented by separate apparatus. Alternatively, multiple functions implemented by multiple units in the above embodiments may be respectively implemented by separate apparatus. In addition, one of the above functions may be realized by multiple units. Needless to say, such a configuration is included in the technical scope of the present disclosure.

In this specification, the steps described in the flowcharts include not only processing performed in time series in the stated order but also processing performed in parallel or individually and not necessarily in time series. Furthermore, even in the steps processed in time series, needless to say, the order may be appropriately changed.

### 8. Exemplary Embodiments

1. An electronic device used with a base station, the electronic device comprising a processing circuit configured to: receive a data stream including at least a first data block and a second data block; send the first data block to a user equipment (UE); generate a second predicted data block using a prediction model based on the first data block; generate a second differential data block based on a difference between the second data block and the second predicted data block; and send the second differential data block to the UE.
2. The electronic device of claim 1, wherein the processing circuit is configured to perform one or more of: in response to a prediction performance of the prediction model being higher than a first predetermined performance condition, not sending the second differential data block to the UE; in response to the prediction performance of the prediction model being lower than a second predetermined performance condition, sending, to the UE, an update to the prediction model; in response to the prediction performance of the prediction model being lower than a third predetermined performance condition, sending auxiliary information associated with the second data block to the UE; or in response to the prediction performance of the prediction model being lower than a fourth predetermined performance condition, stopping using the prediction model.
3. The electronic device of Embodiment 2, wherein the prediction performance of the prediction model is determined at least in part based on a size of the second differential data block.
4. The electronic device of Embodiment 1, wherein the data stream is a video data stream, and the first data block is a base reference frame in the video data stream.
5. The electronic device of Embodiment 1, wherein the data stream further includes at least a third data block, and the processing circuit is configured to: generate a third predicted data block using the prediction model; generate a third differential data block based on a difference between the third data block and the third predicted data block; and send the third differential data block to the UE.
6. The electronic device of Embodiment 1, wherein the base station is connected to a plurality of UEs, and the processing circuit is further configured to: receive a first prediction sub-model from a first UE of the plurality of UEs, the first prediction sub-model being trained based on one or more first data streams, and the first data stream belonging to a first type of data stream; receive a second prediction sub-model from a second UE of the plurality of UEs, the second prediction sub-model being trained based on one or more second data streams, and the second data stream belonging to a second type of data stream; and aggregate at least the first prediction sub-model and the second prediction sub-model to generate a global prediction model as the prediction model.
7. The electronic device of Embodiment 1, wherein the processing circuit is further configured to: send, to a first UE, a stream identifier associated with each of one or more data streams between the base station and the first UE; and send, to the first UE, a stream identifier associated with the one or more first data streams in the one or more data streams to indicate the first UE to use the one or more first data streams to perform training.
8. The electronic device of Embodiment 7, wherein the one or more first data streams are selected from the one or more data streams based on capabilities and/or resources of the first UE.
9. The electronic device of Embodiment 6, wherein the processing circuit is further configured to: train a third prediction sub-model locally at the base station, and aggregate at least the first prediction sub-model, the second prediction sub-model and the third prediction sub-model to generate the global prediction model.
10. The electronic device of Embodiment 6, wherein the one or more first data streams include one or both of a downlink data stream and/or an uplink data stream between the first UE and the base station.
11. The electronic device of Embodiment 6, wherein the first type of data stream and the second type of data stream are different types among: a video data stream; an audio data stream; a control data stream; or a sensor data stream.
12. The electronic device of Embodiment 6, wherein the processing circuit is further configured to: determine a respective differential model between the global prediction model and a local prediction model of each UE of the plurality of UEs; and send, to each UE in a set of UEs in the plurality of UEs, a respective differential model associated with said each UE for updating the local prediction model of said each UE.
13. The electronic device of Embodiment 12, wherein the processing circuit is further configured to: determine the prediction performance of the local prediction model of a particular UE of the plurality of UEs based on the respective differential model associated with the particular UE.
14. The electronic device of Embodiment 13, wherein the processing circuit is further configured to perform one or more of: in response to a particular differential model associated with a particular UE of the plurality of UEs satisfying a first predetermined criterion, sending a first instruction to the particular UE, the first instruction instructing the particular UE no need to update the local prediction model of the particular UE; or in response to the particular differential model satisfying a second predetermined criterion, sending a second instruction to the particular UE, the second instruction instructing the particular UE to stop using the local prediction model of the particular UE to recover the data stream received from the base station.
15. An electronic device used with a user equipment (UE), the electronic device comprising a processing circuit configured to: receive a first data block in a data stream from a base station; generate a second predicted data block using a prediction model based on the first data block; receive a second differential data block from the base station; and recover a second data block in the data stream based on a sum of the second predicted data block and the second differential data block.
16. The electronic device of Embodiment 15, wherein the processing circuit is configured to: in response to a prediction performance of the prediction model being higher than a first predetermined performance condition: not receive the second differential data block from the base station, and use the second predicted data block as the second data block.
17. The electronic device of embodiment 15, wherein the processing circuit is configured to: in response to a prediction performance of the prediction model being lower than a second predetermined performance condition: receive from the base station an update to the prediction model, and update the prediction model based on the update.
18. The electronic device of Embodiment 15, wherein the processing circuit is configured to: in response to a prediction performance of the prediction model being lower than a third predetermined performance condition: receive auxiliary information associated with the second data block from the base station, and recover the second data block at least in part based on the auxiliary information.
19. The electronic device of Embodiment 15, wherein the processing circuit is configured to: in response to a prediction performance of the prediction model being lower than a fourth predetermined performance condition: stop using the prediction model.
20. The electronic device of Embodiment 15, wherein the data stream is a video data stream, and the first data block is a base reference frame in the video data stream.
21. The electronic device of Embodiment 15, wherein the processing circuit is further configured to: generate a third predicted data block using the prediction model; receive a third differential data block from the base station; and recover a third data block in the data stream based on a sum of the third predicted data block and the third differential data block.
22. The electronic device of Embodiment 15, wherein the processing circuit is further configured to: train a first prediction sub-model based on one or more first data streams between the UE and the base station, the first data stream belonging to a first type of data stream; send the first prediction sub-model to the base station; receive a global prediction model, the global prediction model being an aggregation of the first prediction sub-model and one or more other prediction sub-models, the one or more other prediction sub-models at least including a second prediction sub-model that is trained based on one or more second data streams, the second data stream belonging to a second type of data stream; and update the prediction model based on the global prediction model.
23. The electronic device of Embodiment 22, wherein the processing circuit is further configured to: receive, from the base station, a stream identifier associated with each of one or more data streams between the base station and the UE; receive, from the base station, a stream identifier associated with the one or more first data streams; and according to the received stream identifiers associated with the one or more first data streams, train the first prediction sub-model based on the one or more first data streams of the one or more data streams.
24. The electronic device of Embodiment 23, wherein the processing circuit is further configured to: send, to the base station, a capability indication of the UE related to training.
25. The electronic device of Embodiment 22, wherein the one or more other prediction sub-models further comprise a third prediction sub-model that is trained by the base station.
26. The electronic device of Embodiment 22, wherein: the one or more first data streams include one or both of a downlink data stream and/or an uplink data stream between the UE and the base station; the first type of data stream and the second type of data stream are different types among: a video data stream, an audio data stream, a control data stream, or a sensor data stream.
27. The electronic device of Embodiment 22, wherein receiving the global prediction model comprises: receiving a respective differential model between the global prediction model and the prediction model of the UE.
28. The electronic device of Embodiment 22, the processing circuit is further configured to: according to a first instruction received from the base station, not update the prediction model; or according to a second instruction received from the base station, stop using the prediction model to recover the data stream received from the base station.
29. A communication system, comprising: a control-side device, configured to: receive a data stream including at least a first data block and a second data block; send the first data block to a terminal-side device; generate a second predicted data block using a prediction model associated with the terminal-side device based on the first data block; generate a second differential data block based on a difference between the second data block and the second predicted data block; and send the second differential data block to the terminal-side device; the terminal-side device, configured to: receive the first data block from the control-side device; generate a second locally predicted data block using the prediction model associated with the user-side device based on the first data block; receive the second differential data block from the control-side device; and recover the second data block in the data stream based on a sum of the second locally predicted data block and the second differential data block.
30. A communication method, comprising: receiving a data stream including at least a first data block and a second data block; sending the first data block to a user equipment (UE); generating a second predicted data block using a prediction model based on the first data block; generating a second differential data block based on a difference between the second data block and the second predicted data block; and sending the second differential data block to the UE.
31. A communication method, comprising: receiving a first data block in a data stream from a base station; generating a second predicted data block using a prediction model based on the first data block; receiving a second differential data block from the base station; and recovering a second data block in the data stream based on a sum of the second predicted data block and the second differential data block.

## Claims

1. An electronic device used with a base station, the electronic device comprising a processing circuit configured to:
receive a data stream including at least a first data block and a second data block;
send the first data block to a user equipment (UE);
generate a second predicted data block using a prediction model based on the first data block;
generate a second differential data block based on a difference between the second data block and the second predicted data block; and
send the second differential data block to the UE.

2. The electronic device of claim 1, wherein the processing circuit is configured to perform one or more of:
in response to a prediction performance of the prediction model being higher than a first predetermined performance condition, not sending the second differential data block to the UE;
in response to the prediction performance of the prediction model being lower than a second predetermined performance condition, sending, to the UE, an update to the prediction model;
in response to the prediction performance of the prediction model being lower than a third predetermined performance condition, sending auxiliary information associated with the second data block to the UE; or
in response to the prediction performance of the prediction model being lower than a fourth predetermined performance condition, stopping using the prediction model.

3. The electronic device of claim 2, wherein the prediction performance of the prediction model is determined at least in part based on a size of the second differential data block.

4. The electronic device of claim 1, wherein the data stream is a video data stream, and the first data block is a base reference frame in the video data stream.

5. The electronic device of claim 1, wherein the data stream further includes at least a third data block, and the processing circuit is configured to:
generate a third predicted data block using the prediction model;
generate a third differential data block based on a difference between the third data block and the third predicted data block; and
send the third differential data block to the UE.

6. The electronic device of claim 1, wherein the base station is connected to a plurality of UEs, and the processing circuit is further configured to:
receive a first prediction sub-model from a first UE of the plurality of UEs, the first prediction sub-model being trained based on one or more first data streams, and the first data stream belonging to a first type of data stream;
receive a second prediction sub-model from a second UE of the plurality of UEs, the second prediction sub-model being trained based on one or more second data streams, and the second data stream belonging to a second type of data stream; and
aggregate at least the first prediction sub-model and the second prediction sub-model to generate a global prediction model as the prediction model.

7. The electronic device of claim 1, wherein the processing circuit is further configured to:
send, to a first UE, a stream identifier associated with each of one or more data streams between the base station and the first UE; and
send, to the first UE, a stream identifier associated with the one or more first data streams in the one or more data streams to indicate the first UE to use the one or more first data streams to perform training.

8. The electronic device of claim 7, wherein the one or more first data streams are selected from the one or more data streams based on capabilities and/or resources of the first UE.

9. The electronic device of claim 6, wherein the processing circuit is further configured to:
train a third prediction sub-model locally at the base station, and aggregate at least the first prediction sub-model, the second prediction sub-model and the third prediction sub-model to generate the global prediction model.

10. The electronic device of claim 6, wherein the one or more first data streams include one or both of a downlink data stream and/or an uplink data stream between the first UE and the base station.

11. The electronic device of claim 6, wherein the first type of data stream and the second type of data stream are different types among: a video data stream; an audio data stream; a control data stream; or a sensor data stream.

12. The electronic device of claim 6, wherein the processing circuit is further configured to:
determine a respective differential model between the global prediction model and a local prediction model of each UE of the plurality of UEs; and
send, to each UE in a set of UEs in the plurality of UEs, a respective differential model associated with said each UE for updating the local prediction model of said each UE.

13. The electronic device of claim 12, wherein the processing circuit is further configured to:
determine the prediction performance of the local prediction model of a particular UE of the plurality of UEs based on the respective differential model associated with the particular UE.

14. The electronic device of claim 13, wherein the processing circuit is further configured to perform one or more of:
in response to a particular differential model associated with a particular UE of the plurality of UEs satisfying a first predetermined criterion, sending a first instruction to the particular UE, the first instruction instructing the particular UE no need to update the local prediction model of the particular UE; or
in response to the particular differential model satisfying a second predetermined criterion, sending a second instruction to the particular UE, the second instruction instructing the particular UE to stop using the local prediction model of the particular UE to recover the data stream received from the base station.

15. An electronic device used with a user equipment (UE), the electronic device comprising a processing circuit configured to:
receive a first data block in a data stream from a base station;
generate a second predicted data block using a prediction model based on the first data block;
receive a second differential data block from the base station; and
recover a second data block in the data stream based on a sum of the second predicted data block and the second differential data block.

16. The electronic device of claim 15, wherein the processing circuit is configured to:
in response to a prediction performance of the prediction model being higher than a first predetermined performance condition: not receive the second differential data block from the base station, and use the second predicted data block as the second data block.

17. The electronic device of embodiment 15, wherein the processing circuit is configured to:
in response to a prediction performance of the prediction model being lower than a second predetermined performance condition: receive from the base station an update to the prediction model, and update the prediction model based on the update.

18. The electronic device of claim 15, wherein the processing circuit is configured to:
in response to a prediction performance of the prediction model being lower than a third predetermined performance condition: receive auxiliary information associated with the second data block from the base station, and recover the second data block at least in part based on the auxiliary information.

19. The electronic device of claim 15, wherein the processing circuit is configured to:
in response to a prediction performance of the prediction model being lower than a fourth predetermined performance condition: stop using the prediction model.

20. The electronic device of claim 15, wherein the data stream is a video data stream, and the first data block is a base reference frame in the video data stream.

21. The electronic device of claim 15, wherein the processing circuit is further configured to:
generate a third predicted data block using the prediction model;
receive a third differential data block from the base station; and
recover a third data block in the data stream based on a sum of the third predicted data block and the third differential data block.

22. The electronic device of claim 15, wherein the processing circuit is further configured to:
train a first prediction sub-model based on one or more first data streams between the UE and the base station, the first data stream belonging to a first type of data stream;
send the first prediction sub-model to the base station;
receive a global prediction model, the global prediction model being an aggregation of the first prediction sub-model and one or more other prediction sub-models, the one or more other prediction sub-models at least including a second prediction sub-model that is trained based on one or more second data streams, the second data stream belonging to a second type of data stream; and
update the prediction model based on the global prediction model.

23. The electronic device of claim 22, wherein the processing circuit is further configured to:
receive, from the base station, a stream identifier associated with each of one or more data streams between the base station and the UE;
receive, from the base station, a stream identifier associated with the one or more first data streams; and
according to the received stream identifiers associated with the one or more first data streams, train the first prediction sub-model based on the one or more first data streams of the one or more data streams.

24. The electronic device of claim 23, wherein the processing circuit is further configured to:
send, to the base station, a capability indication of the UE related to training.

25. The electronic device of claim 22, wherein the one or more other prediction sub-models further comprise a third prediction sub-model that is trained by the base station.

26. The electronic device of claim 22, wherein:
the one or more first data streams include one or both of a downlink data stream and/or an uplink data stream between the UE and the base station;
the first type of data stream and the second type of data stream are different types among: a video data stream, an audio data stream, a control data stream, or a sensor data stream.

27. The electronic device of claim 22, wherein receiving the global prediction model comprises: receiving a respective differential model between the global prediction model and the prediction model of the UE.

28. The electronic device of claim 22, the processing circuit is further configured to:
according to a first instruction received from the base station, not update the prediction model; or
according to a second instruction received from the base station, stop using the prediction model to recover the data stream received from the base station.

29. A communication system, comprising:
a control-side device, configured to:
receive a data stream including at least a first data block and a second data block;
send the first data block to a terminal-side device;
generate a second predicted data block using a prediction model associated with the terminal-side device based on the first data block;
generate a second differential data block based on a difference between the second data block and the second predicted data block; and
send the second differential data block to the terminal-side device;
the terminal-side device, configured to:
receive the first data block from the control-side device;
generate a second locally predicted data block using the prediction model associated with the user-side device based on the first data block;
receive the second differential data block from the control-side device; and
recover the second data block in the data stream based on a sum of the second locally predicted data block and the second differential data block.

30. A communication method, comprising:
receiving a data stream including at least a first data block and a second data block;
sending the first data block to a user equipment (UE);
generating a second predicted data block using a prediction model based on the first data block;
generating a second differential data block based on a difference between the second data block and the second predicted data block; and
sending the second differential data block to the UE.

31. A communication method, comprising:
receiving a first data block in a data stream from a base station;
generating a second predicted data block using a prediction model based on the first data block;
receiving a second differential data block from the base station; and
recovering a second data block in the data stream based on a sum of the second predicted data block and the second differential data block.
